(19)

Europäisches
Patentamt
European
Patent Office
Office européen
des brevets

(11) **EP 2 947 798 A1**

(12) **EUROPEAN PATENT APPLICATION**
published in accordance with Art. 153(4) EPC

(43) Date of publication:
**25.11.2015 Bulletin 2015/48**

(51) Int Cl.:
**H04L 1/00** *(2006.01)*        **H04L 5/00** *(2006.01)*

(21) Application number: **13872222.8**

(86) International application number:
**PCT/CN2013/072694**

(22) Date of filing: **15.03.2013**

(87) International publication number:
**WO 2014/110865 (24.07.2014 Gazette 2014/30)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **18.01.2013 PCT/CN2013/070686**

(71) Applicant: **Huawei Technologies Co., Ltd.
Longgang District
Shenzhen, Guangdong 518129 (CN)**

(72) Inventors:
• **XIA, Liang
Shenzhen
Guangdong 518129 (CN)**
• **XIA, Yuan
Shenzhen
Guangdong 518129 (CN)**

• **FAN, Xiaoan
Shenzhen
Guangdong 518129 (CN)**
• **MA, Sha
Shenzhen
Guangdong 518129 (CN)**
• **LI, Qiang
Shenzhen
Guangdong 518129 (CN)**
• **GUAN, Lei
Shenzhen
Guangdong 518129 (CN)**

(74) Representative: **Isarpatent
Patentanwälte Behnisch Barth Charles
Hassa Peckmann & Partner mbB
Friedrichstrasse 31
80801 München (DE)**

(54) **METHOD FOR SENDING CONTROL INFORMATION, BASE STATION, AND USER EQUIPMENT**

(57)    Disclosed are a method for sending control information, a base station, and a user equipment (UE). Taking implementation of the method as an example, the method comprises: a base station determining a first subframe and a second subframe, wherein the first subframe is a subframe having a control region, and the second subframe is a subframe with no control region; and the base station sending control information to a UE in the control region of the first subframe, and sending a data signal and/or an enhanced physical downlink control channel (ePDCCH) on the second subframe to the UE. By means of this solution, the first subframe has a control region, the second subframe does not have a control region, and not all the subframes have a control region; therefore, the system overhead is reduced.

determining, by a base station, a first subframe and a second subframe, where the first subframe is a subframe with a control region, and the second subframe is a subframe with no control region

sending, by the base station, control information to a user equipment UE in the control region of the first subframe; and sending a data signal and/or an enhanced physical downlink control channel ePDCCH to the UE in the second subframe

Fig. 1

EP 2 947 798 A1

## Description

This application claims priority to PCT Patent Application No. PCT/CN2013/070686, titled "METHOD FOR SENDING CONTROL INFORMATION, BASE STATION, AND USER EQUIPMENT", filed with the Chinese Patent Office on January 18, 2013, which is incorporated by reference in its entirety herein.

## Technical Field

The present invention relates to the field of communication technology, particularly to a method for sending control information, a base station, and a user equipment.

## Background

In a long term evolution (long term evolution, LTE) system, each subframe includes a control region. The control region, in time domain, is located at first n symbols of the subframe, where n is a natural number ranged from 1 to 4; and, in frequency domain, occupies an entire bandwidth of a carrier. The control region carries downlink control channel, such as a physical downlink control channel (Physical Downlink Control Channel, PDCCH), a physical hybrid automatic repeat request indicator channel (Physical HARQ Indicator Channel, PHICH), and a physical control format indicator channel (Physical Control Format Indicator Channel, PCFICH). Control information includes scheduling information of a physical downlink shared channel (Physical Downlink Shared Channel, PDSCH) or of a physical uplink shared channel (Physical Uplink Shared Channel, PUSCH). User equipment (User Equipment, UE) may obtain the scheduling information of the PDSCH or PUSCH by demodulating the PDCCH, and thus accomplish processes, such as accessing a cell, and transmitting data.

System overhead is large when the control information is transmitted in a method of the existing technology.

## Summary

In view of this, a method for sending control information, a base station, and a user equipment are provided, to reduce system overhead.

In a first aspect, a method for sending control information is provided, which includes:

determining, by a base station, a first subframe and a second subframe, where the first subframe is a subframe with a control region, and the second subframe is a subframe with no control region; and

sending, by the base station, control information to a user equipment UE through the control region of the first subframe; and sending a data signal and/or an enhanced physical downlink control channel ePDCCH to the UE in the second subframe.

In conjunction with the implementation of the first aspect, in a first possible implementation, the determining, by a base station, a first subframe includes at least one of:

determining, by the base station, a subframe including a system information block type 1 as the first subframe;

determining, by the base station, a subframe including a system information block type x as the first subframe, where x is a natural number larger than 1;

determining, by the base station, a multimedia broadcast multicast service over a single frequency network MBSFN subframe as the first subframe;

determining, by the base station, a subframe carrying a channel state information reference signal CSI-RS as the first subframe;

determining, by the base station, a special subframe in subframe configurations 0 and 5 for time division duplexing TDD as the first subframe;

determining, by the base station, a subframe carrying a physical multicast channel as the first subframe;

determining, by the base station, a subframe carrying a random access response grant as the first subframe;

determining, by the base station, the second subframe; and determining a downlink subframe in a radio frame other than the second subframe as the first subframe.

In conjunction with the implementation of the first aspect or the first possible implementation, in a second possible implementation, after determining, by the base station, a first subframe and a second subframe, the method further includes:

determining, by the base station, a bandwidth and/or a frequency domain position occupied by the control region, according to predefined configuration information; or

determining, by the base station, a bandwidth and/or a frequency domain position occupied by the control region, according to a correspondence relationship between a cell identity of a cell corresponding to the base station and a resource occupied by the control region.

In conjunction with the implementation of the first aspect, the first possible implementation or the second possible implementation, in a third possible implementation, after determining, by the base station, a first subframe and a second subframe, the method further includes at least one of:

sending, by the base station, first configuration information to the UE through a system information block type 1, where the first configuration information includes: first time domain configuration information, and/or first frequency domain configuration information, where the first time domain configuration information is adapted to indicate a time domain position of the first subframe, and the first frequency domain configuration information is adapted to indicate a bandwidth and/or a frequency domain position occupied by the control region of the first subframe;

sending, by the base station, second configuration information to the UE through a system information block type x, where x is a natural number larger than 1, and the second configuration information includes: second time domain configuration information, and/or second frequency domain configuration information, where the second time domain configuration information is adapted to indicate a time domain position of the first subframe, and the second frequency domain configuration information is adapted to indicate a bandwidth and/or a frequency domain position occupied by the control region of the first subframe;

sending, by the base station, third configuration information to the UE through a dedicated signaling of a radio resource control RRC, where the third configuration information includes: third time domain configuration information, and/or third frequency domain configuration information, where the third time domain configuration information is adapted to indicate a time domain position of the first subframe, and the third frequency domain configuration information is adapted to indicate a bandwidth and/or a frequency domain position occupied by the control region of the first subframe;

sending, by the base station, fourth configuration information to the UE through a system information block type 1, where the fourth configuration information includes fourth time domain configuration information adapted to indicate a time domain position of the second subframe;

sending, by the base station, fifth configuration information to the UE through a system information block type x, where x is a natural number larger than 1, and the fifth configuration information includes fifth time domain configuration information adapted to indicate a time domain position of the second subframe;

sending, by the base station, sixth configuration information to the UE through a dedicated signaling of a radio resource control RRC, where the sixth configuration information includes sixth time domain configuration information adapted to indicate a time domain position of the second subframe;

sending, by the base station, a high layer signaling to the UE, where the high layer signaling is adapted to indicate a bandwidth and/or a frequency domain position occupied by the control region;

sending, by the base station to the UE in the first subframe, a physical control format indicator channel PCFICH carrying a control format indicator CFI belonging to a first preset value set; and/or sending, by the base station to the UE in the second subframe, a PCFICH carrying a CFI equal to a second preset value, where the second preset value does not belong to the first preset value set.

In conjunction with the third possible implementation, in a fourth possible implementation, at least one of the first time domain configuration information, the second time domain configuration information, the third time domain configuration information, the fourth time domain configuration information, the fifth time domain configuration information and the sixth time domain configuration information includes:

a period and a subframe offset, or includes bitmap encoding.

In conjunction with the implementation of the first aspect, the first, the second, the third, or the fourth possible implementation, in a fifth possible implementation, the control region includes:

all resource elements REs of first n orthogonal frequency division multiplexing OFDM symbols of the first subframe, except for a reference signal RS, where n is an integer ranged from 1 to 4; or

a part of REs of first n OFDM symbols of the first subframe, except for an RS, where n is an integer ranged from 1 to 4.

In conjunction with the implementation of the first aspect, the first, the second, the third, the fourth, or the fifth possible implementation, in a sixth possible implementation, the determining, by a base station, a first subframe and a second subframe, includes at least one of:

determining, by the base station, a first subframe and a second subframe for each of at least two cells; or determining, by the base station, a first subframe and a second subframe for each of at least two carriers;

determining, by the base station, a first subframe and a second subframe of a reference cell, determining that a first cell corresponds to the reference cell, determining a first subframe of the first cell as the first subframe of the reference cell, and determining a second subframe of the first cell as the second subframe of the reference cell, where the reference cell is a reference physical cell or a reference component carrier;

determining, by the base station, a first subframe and a second subframe of a reference cell; determining that a first carrier corresponds to the reference cell, determining a first subframe of the first carrier as the first subframe of the reference cell; and determining a second subframe of the first carrier as the second subframe of the reference cell, where the reference cell is a reference physical cell or a reference component carrier.

In conjunction with the sixth possible implementation, in a seventh possible implementation, the method further includes at least one of:

after determining, by the base station, a first subframe and a second subframe for each of at least two cells, notifying, by the base station, the UE of subframe configuration information of each of the at least two cells, where the subframe configuration information of each cell includes: configuration information of the first subframe of the cell and/or configuration information of the second subframe of the cell;

after determining, by the base station, a first subframe and a second subframe for each of at least two carriers, notifying, by the base station, the UE of subframe configuration information of each of the at least two carriers, where the subframe configuration information of each carrier includes: configuration information of the first subframe of the carrier and/or configuration information of the second subframe of the carrier;

after determining, by the base station, a reference cell of a first cell, notifying, by the base station, the UE of a cell number or a carrier number of the reference cell of the first cell;

after determining, by the base station, a reference cell or a reference carrier of the first carrier, notifying, by the base station, the UE of a cell number or a carrier number of the reference cell of the first carrier.

In conjunction with the implementation of the first aspect, the first, the second, the third, the fourth, the fifth, or the seventh possible implementation, in an eighth possible implementation, the control information includes:

at least one of a physical control format indicator channel PCFICH, a physical downlink control channel PDCCH, a physical hybrid automatic repeat request indicator channel PHICH, and an enhanced physical downlink control channel ePDCCH.

In conjunction with the eighth possible implementation, in a ninth possible implementation, the sending, by the base station, control information to a user equipment UE through the control region, includes at least one of:

sending, by the base station, an ePDCCH to the UE in an enhanced common search space eCSS or an enhanced user equipment-specific search space eUESS of the control region, in a case that the control information includes the ePDCCH;

sending, by the base station, at least two PHICHes to the UE through the control region, in a case that the control information includes the PHICHes, where each PHICH is adapted to indicate whether the UE transmits a PUSCH in a k-th subframe after a subframe carrying the PHICH, where the at least two PHICHes correspond to different values of k, and k is a positive integer;

sending, by the base station, a PCFICH to the UE through the control region, in the case that the control information includes the PCFICH, where the PCFICH is adapted to identify the number of OFDM symbols occupied by the control region.

In conjunction with the implementation of the first aspect, the first, the second, the third, the fourth, the fifth, the seventh, the eighth, or the ninth possible implementation, in a tenth possible implementation, after determining, by the base station, a first subframe and a second subframe, the method further includes at least one of:

mapping, starting from a first OFDM symbol of the second subframe, a physical downlink shared channel PDSCH and/or an ePDCCH, by the base station;

mapping, starting from a first OFDM symbol of the second subframe, a downlink channel by the base station, where the downlink channel includes a PDSCH and/or an ePDCCH, where a resource unit to which the downlink channel is mapped is different from a resource unit to which a PCFICH is mapped;

sending, by the base station, a PHICH and/or a PCFICH in the second subframe; mapping, starting from a first OFDM symbol of the second subframe, a downlink channel by the base station, where the downlink channel includes a PDSCH and/or an ePDCCH, where a resource unit to which the downlink channel is mapped does not include a resource unit to which the PHICH is mapped or a resource unit to which the PCFICH is mapped.

In conjunction with the tenth possible implementation, in an eleventh possible implementation, the resource unit to which the PHICH is mapped includes:

a resource unit to which the PHICH is mapped, which is configured by the base station to the UE via a broadcast channel.

In conjunction with the implementation of the first aspect, the first, the second, the third, the fourth, the fifth, the seventh, the eighth, the ninth, the tenth, or the eleventh possible implementation, in a twelfth possible implementation, after determining, by a base station, a first subframe and a second subframe, the method further includes:

sending, by the base station in the first subframe, a physical control format indicator channel PCFICH carrying a control format indicator CFI belonging to a first preset value set, and/or sending, by the base station in the second subframe, a PCFICH carrying a CFI belonging to the first preset value set.

In conjunction with the implementation of the first aspect, the first, the second, the third, the fourth, the fifth, the seventh, the eighth, the ninth, the tenth, the eleventh, or the twelfth possible implementation, in a thirteenth possible implementation, the determining, by a base station, a second subframe includes:

determining, by the base station, all downlink subframes as the second subframe; or

determining, by the base station, all downlink subframes as the second subframe; and notifying the UE that all downlink subframes are the second subframe, through a high layer signaling.

In conjunction with the implementation of the first aspect, the first or the second possible implementation, in a fourteenth possible implementation, after determining, by a base station, a first subframe and a second subframe, the method further includes:

sending, by the base station in the first subframe to the UE, a physical control format indicator channel PCFICH carrying a control format indicator CFI belonging to a first preset value set, and/or sending, by the base station in the second subframe to the UE, a PCFICH carrying a CFI which is equal to a second preset value, wherein the second preset value does not belong to the first preset value set.

In a second aspect, a method for sending control information is provided, which includes:

receiving, by a user equipment UE, a first subframe and a second subframe from a base station, where the first subframe is a subframe with a control region, and the second subframe is a subframe with no control region;

determining, by the UE, the first subframe and the second subframe; and

acquiring, by the UE, control information from the control region of the first subframe, and acquiring a data signal and/or an enhanced physical downlink control channel ePDCCH from the second subframe.

In conjunction with the implementation of the second aspect, in a first possible implementation, the control region includes:

all resource elements REs of first n orthogonal frequency division multiplexing OFDM symbols of the first subframe, except for a reference signal RS, where n is an integer ranged from 1 to 4; or

a part of REs of first n OFDM symbols of the first subframe, except for an RS, where n is an integer ranged from 1 to 4.

In conjunction with the implementation of the second aspect, or the first possible implementation, in a second possible implementation, the determining, by the UE, the first subframe includes at least one of:

receiving, by the UE, subframe configuration information of each of at least two cells from the base station, where the subframe configuration information of each cell includes: configuration information of the first subframe of the cell and/or configuration information of the second subframe of the cell; and determining the first subframe based on the subframe configuration information;

receiving, by the UE, subframe configuration information of each of at least two carriers from the base station, where the subframe configuration information of each carrier includes: configuration information of the first subframe of the carrier and/or configuration information of the second subframe of the carrier; and determining the first subframe based on the subframe configuration information;

receiving, by the UE, a cell number or a carrier number of a reference cell of a first cell from the base station; and determining a subframe of the reference cell as a first subframe of the first cell;

receiving, by the UE, a cell number or a carrier number of a reference cell of a first carrier from the base station; and determining a subframe of the reference cell as a first subframe of the first carrier.

In conjunction with the implementation of the second aspect, the first, or the second possible implementation, in a third possible implementation, the control information includes:

at least one of a physical control format indicator channel PCFICH, a physical downlink control channel PDCCH, a physical hybrid automatic repeat request indicator channel PHICH, and an enhanced physical downlink control channel ePDCCH.

In conjunction with the implementation of the second aspect, in a fourth possible implementation, the acquiring, by the UE, control information from the control region of the first subframe, includes at least one of:

acquiring, by the UE, the ePDCCH from an enhanced common search space eCSS or an enhanced user equipment specific search space eUESS of the control region, in a case that the control information includes the ePDCCH;

acquiring, by the UE, at least two PHICHes from the control region, in a case that the control information includes the PHICHes, where each PHICH is adapted to indicate whether the UE transmits a PUSCH in a k-th subframe after a subframe carrying the PHICH, where the at least two PHICHes correspond to different values of k and k is a positive integer;

acquiring, by the UE, the PCFICH from the control region, in a case that the control information includes the PCFICH, where the PCFICH is adapted to identify the number of OFDM symbols occupied by the control region.

In conjunction with the implementation of the second aspect, the first, the second, the third, or the fourth possible implementation, in a fifth possible implementation, the determining, by the UE, the first subframe includes at least one of:

determining, by the UE, a subframe including a system information block type 1 as the first subframe;

determining, by the UE, a subframe including a system information block type x as the first subframe, where x is a natural number larger than 1;

determining, by the UE, a multimedia broadcast multicast service over a single frequency network MBSFN subframe as the first subframe;

determining, by the UE, a subframe carrying a channel state information reference signal CSI-RS as the first subframe;

determining, by the UE, a special subframe in subframe configurations 0 and 5 for time division duplexing TDD as the first subframe;

determining, by the UE, a subframe carrying a physical multicast channel as the first subframe;

determining, by the UE, a subframe carrying random access response grant as the first subframe;

determining, by the UE, the second subframe; and determining a downlink subframe in a radio frame other than the second subframe as the first subframe.

In conjunction with the implementation of the second aspect, the first, the second, the third, the fourth, or the fifth possible implementation, in a sixth possible implementation, after determining, by the UE, the first subframe, the method further includes:

determining, by the UE, a bandwidth and/or a frequency domain position occupied by the control region, according to predefined configuration information; or

determining, by the UE, a bandwidth and/or a frequency domain position occupied by the control region, according to a correspondence relationship between a cell identity of a cell corresponding to the UE and a resource occupied by the control region.

In conjunction with the implementation of the second aspect, the first, the second, the third, the fourth, the fifth, or the sixth possible implementation, in a seventh possible implementation, the determining, by the UE, the first subframe includes at least one of:

acquiring, by the UE, first configuration information from a system information block type 1, and determining the first subframe based on the first configuration information, where the first configuration information includes: first time domain configuration information, and/or first frequency domain configuration information, where the first time domain configuration information is adapted to indicate a time domain position of the first subframe, and the first frequency domain configuration information is adapted to indicate a bandwidth and/or a frequency domain position occupied by the control region of the first subframe;

acquiring, by the UE, second configuration information from a system information block type x, and determining the first subframe based on the second configuration information, where x is a natural number larger than 1, and the second configuration information includes: second time domain configuration information, and/or second frequency domain configuration information, where the second time domain configuration information is adapted to indicate a time domain position of the first subframe, and the second frequency domain configuration information is adapted to indicate a bandwidth and/or a frequency domain position occupied by the control region of the first subframe;

acquiring, by the UE, third configuration information from a dedicated signaling of a radio resource control RRC, and determining the first subframe based on the third configuration information, where the third configuration information includes: third time domain configuration information, and/or third frequency domain configuration information, where the third time domain configuration information is adapted to indicate a time domain position of the first subframe, and the third frequency domain configuration information is adapted to indicate a bandwidth and/or a frequency domain position occupied by the control region of the first subframe;

acquiring, by the UE, fourth configuration information from a system information block type 1, determining the second subframe based on the fourth configuration information, and determining a downlink subframe in a radio frame other than the second subframe as the first subframe, where the fourth configuration information includes fourth time domain configuration information adapted to indicate a time domain position of the second subframe;

acquiring, by the UE, fifth configuration information from a system information block type x; determining the second subframe based on the fourth configuration information; and determining a downlink subframe in a radio frame other than the second subframe as the first subframe, where x is a natural number larger than 1, and the fifth configuration information includes fifth time domain configuration information adapted to indicate a time domain position of the second subframe;

acquiring, by the UE, sixth configuration information from a dedicated signaling of a radio resource control RRC, determining the second subframe based on the sixth configuration information, and determining a downlink subframe in a radio frame other than the second subframe as the first subframe, where the sixth configuration information includes sixth time domain configuration information adapted to indicate a time domain position of the second subframe;

receiving, by the UE, a high layer signaling; and determining a control region of the first subframe based on the high layer signaling, where the high layer signaling is adapted to indicate a bandwidth and/or a frequency domain position occupied by the control region;

in a case that a control format indicator CFI, carried in a PCFICH of a subframe, belongs to a first preset value set, determining, by the UE, the subframe as the first subframe; and/or in a case that a CFI carried in a PCFICH of a subframe is equal to a second preset value, determining, by the UE, the subframe as the second subframe, where the second preset value does not belong to the first preset value set.

In conjunction with the seventh possible implementation, in an eighth possible implementation, at least one of the first time domain configuration information, the second time domain configuration information, the third time domain configuration information, the fourth time domain configuration information, the fifth time domain configuration information and the sixth time domain configuration information includes a period and a subframe offset, and the UE determines the time domain position of the first subframe based on the period and the subframe offset; or

at least one of the first time domain configuration information, the second time domain configuration information, the third time domain configuration information, the fourth time domain configuration information, the fifth time domain configuration information and the sixth time domain configuration information includes bitmap encoding, and the UE determines the time domain position of the first subframe based on the bitmap encoding.

In conjunction with the implementation of the second aspect, the first, the second, the third, the fourth, the fifth, the sixth, the seventh, or the eighth possible implementation, in a ninth possible implementation, after receiving, by the UE, a first subframe and a second subframe from the base station, the method further includes at least one of:

determining, by the UE, the second subframe; and acquiring, starting from a first OFDM symbol of the second subframe, a physical downlink shared channel PDSCH and/or an ePDCCH by the UE; or acquiring, starting from a first OFDM symbol of the second subframe, a downlink channel by the UE, where the downlink channel includes: the PDSCH and/or the ePDCCH, where a resource unit occupied by the downlink channel is different from a resource unit occupied by a PCFICH;

receiving, by the UE, a PHICH and/or PCFICH from the second subframe; and acquiring, by the UE, a downlink channel which is mapped starting from a first OFDM symbol of the second subframe, where the downlink channel includes: a PDSCH and/or an ePDCCH, where a resource unit to which the downlink channel is mapped does not include a resource unit to which the PHICH is mapped or a resource unit to which the PCFICH is mapped.

In conjunction with the ninth possible implementation of the second aspect, in a tenth possible implementation, the resource unit to which the PHICH is mapped includes:

a resource unit to which the PHICH is mapped, which is configured by the base station and received by the UE via a broadcast channel.

In conjunction with the implementation of the second aspect, the first, the second, the third, the fourth, the fifth, the sixth, the seventh, the eighth, the ninth, or the tenth possible implementation, in an eleventh possible implementation, after determining, by the UE, the first subframe and the second subframe, the method further includes:

receiving, by the UE, a physical control format indicator channel PCFICH which is sent in the first subframe and carries a control format indicator CFI belonging to a first preset value set, and/or receiving, by the UE, a PCFICH which is sent in the second subframe and carries a CFI belonging to the first preset value set.

In conjunction with the implementation of the second aspect, the first, the second, the third, the fourth, the fifth, the sixth, the seventh, the eighth, the ninth, the tenth, or the eleventh possible implementation, in a twelfth possible implementation, the determining, by the UE, the second subframe, includes:

receiving, by the UE, a high layer signaling from a base station, where the high layer signaling is adapted to indicate that all downlink subframes are the second subframe.

In conjunction with the implementation of the second aspect, the first, the second, the third, the fourth, the fifth, or the sixth possible implementation, in a thirteenth possible implementation, the determining, by the UE, the first subframe, includes at least one of:

determining, by the UE, that a subframe is the first subframe if a control format indicator CFI carried in a PCFICH in the subframe belongs to a first preset value set, and/or determining, by the UE, that a subframe is the second subframe if a CFI carried in a PCFICH in the subframe is equal to a second preset value, where the second preset value does not belong to the first preset value set.

In a third aspect, a base station is provided, including:

a subframe determining unit, adapted to determine a first subframe and a second subframe, where the first subframe is a subframe with a control region, and the second subframe is a subframe with no control region; and

a sending unit, adapted to send control information to a user equipment UE through the control region of the first subframe determined by the subframe determining unit, and to send a data signal and/or an enhanced physical downlink control channel ePDCCH to the UE in the second subframe.

In conjunction with the implementation of the third aspect, in a first possible implementation, the subframe determining unit is adapted to determine the first subframe by at least one of:

determining a subframe including a system information block type 1 as the first subframe;

determining a subframe including a system information block type x as the first subframe, where x is a natural number larger than 1;

determining a multimedia broadcast multicast service over a single frequency network MBSFN subframe as the first subframe;

determining a subframe carrying a channel state information reference signal CSI-RS as the first subframe;

determining a special subframe in subframe configurations 0 and 5 for time division duplexing TDD as the first subframe;

determining a subframe carrying a physical multicast channel as the first subframe;

determining a subframe carrying a random access response grant as the first subframe;

determining the second subframe, and determining a downlink subframe in the radio frame other than the second subframe as the first subframe.

In conjunction with the implementation of the third aspect, or the first possible implementation, in a second possible implementation, the base station further includes:

a bandwidth position determining unit, adapted to determine a bandwidth and/or a frequency domain position occupied by the control region, according to predefined configuration information or to determine a bandwidth and/or a frequency domain position occupied by the control region, according to a correspondence relationship between a cell identity of a cell corresponding to the base station and a resource occupied by the control region, after the subframe determining unit determines the first subframe and the second subframe; and

the sending unit is adapted to send control information to the UE, by using the bandwidth and/or the frequency domain position occupied by the control region, which is determined by the bandwidth position determining unit.

In conjunction with the implementation of the third aspect, the first, or the second possible implementation, in a third possible implementation, after the subframe determining unit determines the first subframe and the second subframe, the sending unit is further adapted to perform at least one of:

sending first configuration information to the UE through a system information block type 1, where the first configuration information includes: first time domain configuration information, and/or first frequency domain configuration information, where the first time domain configuration information is adapted to indicate a time domain position of the first subframe, and the first frequency domain configuration information is adapted to indicate a bandwidth and/or a frequency domain position occupied by the control region of the first subframe;

sending second configuration information to the UE through a system information block type x, where x is a natural number larger than 1, and the second configuration information includes: second time domain configuration information, and/or second frequency domain configuration information, where the second time domain configuration information is adapted to indicate a time domain position of the first subframe, and the second frequency domain configuration information is adapted to indicate a bandwidth and/or a frequency domain position occupied by the control region of the first subframe;

sending third configuration information to the UE through a dedicated signaling of a radio resource control RRC, where the third configuration information includes: third time domain configuration information, and/or third frequency domain configuration information, where the third time domain configuration information is adapted to indicate a time domain position of the first subframe, and the third frequency domain configuration information is adapted to indicate a bandwidth and/or a frequency domain position occupied by the control region of the first subframe;

sending fourth configuration information to the UE through a system information block type 1, where the fourth configuration information includes fourth time domain configuration information adapted to indicate a time domain position of the second subframe;

sending fifth configuration information to the UE through a system information block type x, where x is a natural number larger than 1, and the fifth configuration information includes fifth time domain configuration information adapted to indicate a time domain position of the second subframe;

sending sixth configuration information to the UE through a dedicated signaling of a radio resource control RRC, where the sixth configuration information includes sixth time domain configuration information adapted to indicate a time domain position of the second subframe;

sending a high layer signaling to the UE, where the high layer signaling is adapted to indicate a bandwidth and/or a frequency domain position occupied by the control region;

sending, to the UE through the first subframe, a physical control format indicator channel PCFICH carrying a control format indicator CFI belonging to a first preset value set; and/or sending, to the UE through the second subframe, a PCFICH carrying a CFI which is equal to a second preset value, where the second preset value does not belong to the first preset value set.

In conjunction with the third possible implementation, in a fourth possible implementation, at least one of the first time domain configuration information, the second time domain configuration information, the third time domain configuration information, the fourth time domain configuration information, the fifth time domain configuration information and the sixth time domain configuration information, sent by the sending unit, includes: a period and subframe offset, or includes bitmap encoding.

In conjunction with the implementation of the third aspect, the first, the second, the third, or the fourth possible implementation, in a fifth possible implementation, the control region used by the sending unit includes:

all resource elements REs of first n orthogonal frequency division multiplexing OFDM symbols of the first subframe, except for a reference signal RS, where n is an integer ranged from 1 to 4; or

a part of REs of first n OFDM symbols of the first subframe, except for an RS, where n is an integer ranged from 1 to 4.

In conjunction with the implementation of the third aspect, the first, the second, the third, the fourth, or the fifth possible implementation, in a sixth possible implementation, the subframe determining unit is adapted to determine a first subframe and a second subframe by at least one of:

determining, by the subframe determining unit, a first subframe and a second subframe for each of at least two cells; or determining, by the base station, a first subframe and a second subframe for each of at least two carriers;

determining, by the subframe determining unit, a first subframe and a second subframe of a reference cell, determining that a first cell corresponds to the reference cell, determining a first subframe of the first cell as the first subframe of the reference cell, and determining a second subframe of the first cell as the second subframe of the reference cell, where the reference cell is a reference physical cell or a reference component carrier;

determining, by the subframe determining unit, a first subframe and a second subframe of a reference cell, determining that a first carrier corresponds to the reference cell, determining a first subframe of the first carrier as the first subframe of the reference cell, and determining a second subframe of the first carrier as the second subframe of the reference cell, where the reference cell is a reference physical cell or a reference component carrier.

In conjunction with the implementation of the third aspect, in a seventh possible implementation, the sending unit is further adapted to perform at least one of the following steps:

after determining, by the subframe determining unit, a first subframe and a second subframe for each of at least two cells, notifying the UE of subframe configuration information of each of the at least two cells, where the subframe configuration information of each cell includes: configuration information of the first subframe of the cell and/or configuration information of the second subframe of the cell;

after determining, by the subframe determining unit, a first subframe and a second subframe for each of at least two carriers, notifying the UE of subframe configuration information of each of the at least two carriers, where the subframe configuration information of each carrier includes: configuration information of the first subframe of the carrier and/or configuration information of the second subframe of the carrier;

after determining, by the subframe determining unit, a reference cell of a first cell, notifying the UE of a cell number or a carrier number of the reference cell of the first cell;

after determining, by the subframe determining unit, a reference cell or a reference carrier of a first carrier, notifying the UE of a cell number or a carrier number of the reference cell of the first carrier.

In conjunction with the implementation of the third aspect, the first, the second, the third, the fourth, the fifth, the sixth, or the seventh possible implementation, in an eighth possible implementation, the control information sent by the sending unit includes: at least one of a physical control format indicator channel PCFICH, a physical downlink control channel PDCCH, a physical hybrid automatic repeat request indicator channel PHICH, and an enhanced physical downlink control channel ePDCCH.

In conjunction with the implementation of the third aspect, in a ninth possible implementation, the sending unit is configured to send control information to the UE through the control region by at least one of the following steps:

sending, by the sending unit, the ePDCCH to the UE in an enhanced common search space eCSS or an enhanced user equipment specific search space eUESS of the control region, in a case that the control information includes the ePDCCH;

sending, by the sending unit, at least two PHICHes to the UE through the control region, in a case that the control information includes the PHICHes, where each PHICH is adapted to indicate whether the UE transmits a PUSCH in a k-th subframe after a subframe carrying the PHICH, where the at least two PHICHes correspond to different values of k, and k is a positive integer;

sending, by the sending unit, the PCFICH to the UE through the control region, in the case that the control information includes the PCFICH, where the PCFICH is adapted to identify the number of OFDM symbols occupied by the control region.

In conjunction with the implementation of the third aspect, the first, the second, the third, the fourth, the fifth, the sixth, the seventh, the eighth, or the ninth possible implementation, in a tenth possible implementation, the base station further includes:

a mapping unit, adapted tomap, starting from a first OFDM symbol of the second subframe, a physical downlink shared channel PDSCH and/or an ePDCCH or to map, starting from a first OFDM symbol of the second subframe, a downlink channel, after the subframe determining unit determines the first subframe and the second subframe, where the downlink channel includes a PDSCH and/or an ePD-DCCH, where a resource unit to which the downlink channel is mapped is different from a resource unit to which a PCFICH is mapped.

In conjunction with the implementation of the third aspect, the first, the second, the third, the fourth, the fifth, the sixth, the seventh, the eighth, the ninth, or the tenth possible implementation, in an eleventh possible implementation, after the subframe determining unit determines the first subframe and the second subframe, the sending unit is further adapted to send a PHICH and/or PCFICH in the second subframe, and/or to map, starting from a first OFDM symbol of the second subframe, a downlink channel, where the downlink channel includes a PDSCH and/or an ePDCCH, where a resource unit to which the downlink channel is mapped does not include a resource unit to which the PHICH is mapped or a resource unit to which the PCFICH is mapped.

In conjunction with the eleventh possible implementation of the third aspect, in a twelfth possible implementation, the resource unit to which the PHICH is mapped by the sending unit includes: a resource unit which is configured to the UE via a broadcast channel as a resource unit to which the PHICH is mapped.

In conjunction with the twelfth possible implementation of the third aspect, in a thirteenth possible implementation, after the first subframe and the second subframe are determined, the sending unit is further adapted to send, in the first subframe, a physical control format indicator channel PCFICH carrying a control format indicator CFI belonging to a first preset value set, and/or to send, in the second subframe, a PCFICH carrying a CFI belonging to the first preset value set.

In conjunction with the implementation of the third aspect, the first, the second, the third, the fourth, the fifth, the sixth, the seventh, the eighth, the ninth, the tenth, the eleventh, the twelfth, or the thirteenth possible implementation, in a fourteenth possible implementation, the subframe determining unit is further adapted to determine all downlink subframes as the second subframe; or, the sending unit is adapted to notify the UE that all downlink subframes are the second subframe, via a high layer signaling, in a case that the subframe determining unit determines all downlink subframes as the second subframe.

In conjunction with the implementation of the third aspect, the first, the second, the third, the fourth, the fifth, the sixth, the seventh, the eighth, the ninth, the tenth, the eleventh, the twelfth, the thirteenth, or the fourteenth possible implementation, in a fifteenth possible implementation, after the subframe determining unit determines the first subframe and the second subframe, the sending unit is further adapted to send, in the first subframe to the UE, a physical control format indicator channel PCFICH carrying a control format indicator CFI belonging to a first preset value set, and/or to send, in the second subframe to the UE, a PCFICH carrying a CFI equaling to a second preset value, where the second preset value does not belong to the first preset value set.

In a fourth aspect, a user equipment is provided, which includes:

a subframe receiving unit, adapted to receive a first subframe and a second subframe from a base station, where the first subframe is a subframe with a control region, and the second subframe is a subframe with no control region;

a subframe determining unit, adapted to determine the first subframe and the second subframe received by the subframe receiving unit; and

an information acquiring unit, adapted to acquire control information from the control region of the first subframe determined by the subframe determining unit, and to acquire a data signal and/or an enhanced physical downlink control channel ePDCCH from the second subframe.

In conjunction with the implementation of the fourth aspect, in a first possible implementation, the control region of the first subframe received by the subframe receiving unit includes: all resource elements REs of first n orthogonal frequency division multiplexing OFDM symbols of the first subframe, except for a reference signal RS, where n is an integer ranged from 1 to 4; or a part of REs of first n OFDM symbols of the first subframe, except for an RS, where n is an integer ranged from 1 to 4.

In conjunction with the implementation of the fourth aspect, or the first possible implementation, in a second possible implementation, the subframe determining unit determines the first subframe by at least one of the following steps:

receiving, by the subframe determining unit, subframe configuration information of each of at least two cells from the base station, where the subframe configuration information of each cell includes: configuration information of the first subframe of the cell and/or configuration information of the second subframe of the cell; and determining the first subframe based on the subframe configuration information;

receiving, by the subframe determining unit, subframe configuration information of each of at least two carriers from the base station, where the subframe configuration information of each carrier includes: configuration information of the first subframe of the carrier and/or configuration information of the second subframe of the carrier; and determining the first subframe based on the subframe configuration information;

receiving, by the subframe determining unit, a cell number or a carrier number of a reference cell of a first cell from the base station; and determining a subframe of the reference cell as a first subframe of the first cell;

receiving, by the subframe determining unit, a cell number or a carrier number of a reference cell of a first carrier from the base station; and determining a subframe of the reference cell as a first subframe of the first carrier.

In conjunction with the implementation of the fourth aspect, the first, or the second possible implementation, in a third possible implementation, the control information acquired by the information acquiring unit includes: at least one of a physical control format indicator channel PCFICH, a physical downlink control channel PDCCH, a physical hybrid automatic repeat request indicator channel PHICH, and an enhanced physical downlink control channel ePDCCH.

In conjunction with the implementation of the fourth aspect, in a fourth possible implementation, the information acquiring unit acquires control information from the control region of the first subframe by at least one of the following steps:

acquiring, by the information acquiring unit, an ePDCCH from an enhanced common search space eCSS or an enhanced user equipment specific search space eUESS of the control region, in a case that the control information includes the ePDCCH;

acquiring, by the information acquiring unit, at least two PHICHes from the control region, in a case that the control information includes the PHICH, where each PHICH is adapted to indicate whether the UE transmits a PUSCH in a k-th subframe after a subframe carrying the PHICH, where the at least two PHICHes correspond to different values of k, and k is a positive integer;

acquiring, by the information acquiring unit, a PCFICH from the control region, in a case that the control information includes the PCFICH, where the PCFICH is adapted to identify the number of OFDM symbols occupied by the control region.

In conjunction with the implementation of the fourth aspect, the first, the second, the third, or the fourth possible implementation, in a fifth possible implementation, the subframe determining unit is adapted to determine the first subframe by at least one of:

determining, by the subframe determining unit, a subframe including a system information block type 1 as the first subframe;

determining, by the subframe determining unit, a subframe including a system information block type x as the first subframe, where x is a natural number larger than 1;

determining, by the subframe determining unit, a multimedia broadcast multicast service over a single frequency network MBSFN subframe as the first subframe;

determining, by the subframe determining unit, a subframe carrying a channel state information reference signal CSI-RS as the first subframe;

determining, by the subframe determining unit, a special subframe in subframe configurations 0 and 5 for time division duplexing TDD as the first subframe;

determining, by the subframe determining unit, a subframe carrying a physical multicast channel as the first subframe;

determining, by the subframe determining unit, a subframe carrying a random access response grant as the first subframe;

determining, by the subframe determining unit, the second subframe; and determining a downlink subframe in a radio frame other than the second subframe as the first subframe.

In conjunction with any one of the forgoing implementations of the fourth aspect, in a sixth possible implementation, the UE further includes:

a bandwidth frequency domain determining unit, adapted to determine, according to predefined configuration information, a bandwidth and/or a frequency domain position occupied by the control region or to determine, according to a correspondence relationship between a cell identity of a cell corresponding to the user equipment and a resource occupied by the control region, a bandwidth and/or a frequency domain position occupied by the control region, after the subframe determining unit determines the first subframe.

In conjunction with the implementation of the fourth aspect, the first, the second, the third, the fourth, the fifth, or the sixth possible implementation, in a seventh possible implementation, the subframe determining unit is adapted to determine the first subframe by at least one of:

acquiring, by the subframe determining unit, first configuration information from a system information block type 1, and determining the first subframe based on the first configuration information, where the first configuration information includes: first time domain configuration information, and/or first frequency domain configuration information, where the first time domain configuration information is adapted to indicate a time domain position of the first subframe, and the first frequency domain configuration information is adapted to indicate a bandwidth and/or a frequency domain position occupied by the control region of the first subframe;

acquiring, by the subframe determining unit, second configuration information from a system information block type x, and determining the first subframe based on the second configuration information, where x is a natural number larger than 1, and the second configuration information includes: second time domain configuration information, and/or second frequency domain configuration information, where the second time domain configuration information is adapted to indicate a time domain position of the first subframe, and the second frequency domain configuration information is adapted to indicate a bandwidth and/or a frequency domain position occupied by the control region of the first subframe;

acquiring, by the subframe determining unit, third configuration information from a dedicated signaling of a radio resource control RRC, and determining the first subframe based on the third configuration information, where the third configuration information includes: third time domain configuration information, and/or third frequency domain configuration information, where the third time domain configuration information is adapted to indicate a time domain position of the first subframe, and the third frequency domain configuration information is adapted to indicate a bandwidth and/or a frequency domain position occupied by the control region of the first subframe;

acquiring, by the subframe determining unit, fourth configuration information from a system information block type 1, determining the second subframe based on the fourth configuration information, and determining a downlink subframe in a radio frame except for the second subframe as the first subframe, where the fourth configuration information includes fourth time domain configuration information adapted to indicate a time domain position of the second subframe;

acquiring, by the subframe determining unit, fifth configuration information from a system information block type x, determining the second subframe based on the fourth configuration information, and determining a downlink subframe in a radio frame except for the second subframe as the first subframe, where x is a natural number larger than 1, and the fifth configuration information includes fifth time domain configuration information adapted to indicate a time domain position of the second subframe;

acquiring, by the subframe determining unit, sixth configuration information from a dedicated signaling of a radio resource control RRC; determining the second subframe based on the sixth configuration information, and determining a downlink subframe in a radio frame except for the second subframe as the first subframe, where the sixth configuration information includes sixth time domain configuration information adapted to indicate a time domain position of the second subframe;

receiving, by the subframe determining unit, a high layer signaling; and determining, by the subframe determining unit, a control region of the first subframe based on the high layer signaling, where the high layer signaling is adapted to indicate a bandwidth and/or a frequency domain position occupied by the control region;

in a case that a control format indicator CFI, carried in a PCFICH of a subframe, belongs to a first preset value set, determining, by the subframe determining unit, the subframe as the first subframe; and/or in a case that a CFI carried in a PCFICH in a subframe is equal to a second preset value, determining, by the subframe determining unit, the subframe as the second subframe, where the second preset value does not belong to the first preset value set.

In conjunction with the seventh possible implementation, in an eighth possible implementation, when at least one of the first time domain configuration information, the second time domain configuration information, the third time domain configuration information, the fourth time domain configuration information, the fifth time domain configuration information and the sixth time domain configuration information includes a period and a subframe offset, the subframe determining unit is adapted to determine the time domain position of the first subframe based on the period and the subframe offset; or when at least one of the first time domain configuration information, the second time domain configuration information, the third time domain configuration information, the fourth time domain configuration information, the fifth time domain configuration information and the sixth time domain configuration information includes bitmap encoding, the subframe determining unit is adapted to determine the time domain position of the first subframe based on the bitmap encoding.

In conjunction with the implementation of the fourth aspect, the first, the second, the third, the fourth, the fifth, the sixth, the seventh, or the eighth possible implementation, in a ninth possible implementation, the subframe determining unit is further configured to determine the second subframe, after the subframe receiving unit receives the first subframe and the second subframe sent by the base station; and

the user equipment further includes: a channel acquiring unit, adapted to acquire, starting from a first OFDM symbol of the second subframe, a physical downlink shared channel PDSCH and/or an ePDCCH, or to acquire, starting from a first OFDM symbol of the second subframe, a downlink channel, where the downlink channel comprises: a PDSCH and/or an ePDCCH, where a resource unit occupied by the downlink channel is different from a resource unit occupied by a PCFICH.

In conjunction with the implementation of the fourth aspect, the first, the second, the third, the fourth, the fifth, the sixth, the seventh, the eighth, or the ninth possible implementation, in a tenth possible implementation, the subframe receiving unit is further adapted to receive a PHICH and/or PCFICH sent in the second subframe; and/or to receive a downlink channel which is mapped starting from a first OFDM symbol of the second subframe, where the downlink channel includes: a PDSCH and/or an ePDCCH, where a resource unit to which the downlink channel is mapped does not include a resource unit to which the PHICH is mapped or a resource unit to which the PCFICH is mapped.

In conjunction with the tenth possible implementation of the fourth aspect, in an eleventh possible implementation, the subframe receiving unit is adapted to receive, via a broadcast channel, a resource unit to which the PHICH is mapped, which is configured by the base station.

In conjunction with the implementation of the fourth aspect, the first, the second, the third, the fourth, the fifth, the sixth, the seventh, the eighth, the ninth, the tenth, or the eleventh possible implementation, in a twelfth possible implementation, the subframe receiving unit is further adapted to receive a physical control format indicator channel PCFICH which is sent in the first subframe and carries a control format indicator CFI belonging to a first preset value set, and/or to receive a PCFICH which is sent in the second subframe and carries a CFI belonging to the first preset value set, after the first subframe and the second subframe are determined.

In conjunction with the implementation of the fourth aspect, the first, the second, the third, the fourth, the fifth, the sixth, the seventh, the eighth, the ninth, the tenth, the eleventh, or the twelfth possible implementation, in a thirteenth possible implementation, the subframe determining unit is further adapted to determine all downlink subframes as the second subframe according to a high layer signaling received from a base station, where the high layer signaling is adapted to indicate that all downlink subframes are the second subframe.

In conjunction with the implementation of the fourth aspect, the first, the second, the third, the fourth, the fifth, or the sixth possible implementation, in a fourteenth possible implementation, the subframe determining unit is adapted to determine the first subframe by at least one of the following steps: determining, by the subframe determining unit, a subframe as the first subframe in a case that a control format indicator CFI carried in a PCFICH of the subframe belongs to a first preset value set; and/or determining, by the subframe determining unit, a subframe as the second subframe in a case that a CFI carried in a PCFICH of the subframe is equal to a second preset value, where the second preset value does not belong to the first preset value set.

According to the forgoing technical solutions, following advantages are caused. The first subframe includes a control region, and the second subframe does not include any control region, rather than each subframe has a control region. Thus, system overhead is reduced.

**Brief Description of the Drawings**

To better explain the technical solutions in embodiments of the invention, drawings for description of the embodiments are described below briefly. Apparently, the drawings described below are merely a few embodiments of the invention. For those skilled in the art, other drawings may be obtained without paying any creative work according to these drawings.

Fig. 1 is a flow chart of a method for sending control information according to an embodiment of the invention;

Fig. 2 is a flow chart of another method for sending control information according to an embodiment of the invention;

Fig. 3 is a structural diagram of a first kind of base station according to an embodiment of the invention;

Fig. 4 is a structural diagram of a second kind of base station according to an embodiment of the invention;

Fig. 5 is a structural diagram of a third kind of base station according to an embodiment of the invention;

Fig. 6 is a structural diagram of a first kind of user equipment according to an embodiment of the invention;

Fig. 7 is a structural diagram of a second kind of user equipment according to an embodiment of the invention;

Fig. 8 is a structural diagram of a third kind of user equipment according to an embodiment of the invention;

Fig. 9 is a structural diagram of a fourth kind of user equipment according to an embodiment of the invention; and

Fig. 10 is a structural diagram of a fifth kind of user equipment according to an embodiment of the invention.

**Detailed Description of Embodiments**

To make the object, technical solutions and virtues of the invention even clear, the invention is further described in detail hereinafter in conjunction with the drawings. Apparently, the described embodiments are merely a few, rather than all embodiments of the invention. Based on the embodiments in the invention, any other embodiment obtained by those skilled in the art without creative work falls within the scope of the invention.

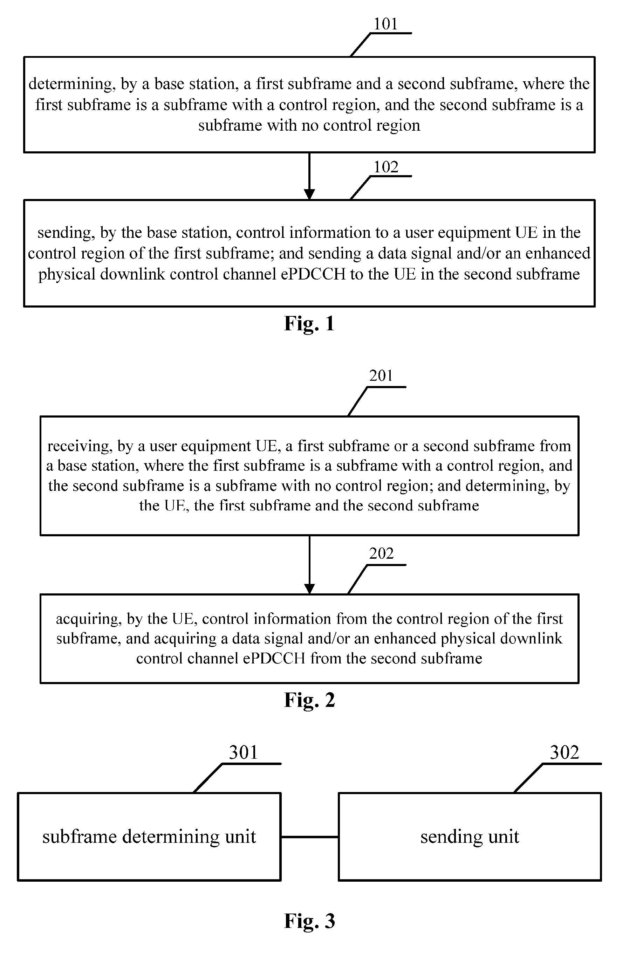

A method for sending control information is provided according to an embodiment of the invention, which is applied to a base station. As shown in Fig. 1, the method includes:

> 101 includes: determining, by a base station, a first sub frame and a second sub frame, where the first subframe is a subframe with a control region, and the second subframe is a subframe with no control region.

It should be noted that both the first subframe and the second subframe are downlink subframes.

Optionally, the control region may be: all resource elements (Resource Elements, RE) of first n orthogonal frequency division multiplexing (Orthogonal Frequency Division Multiple, OFDM) symbols of the first subframe, except for a reference signal (Reference Signal, RS), where n is an integer between 1 and 4; or a part of REs of first n OFDM symbols of the first subframe, except for an RS, where n is an integer between 1 and 4. In particular, the above RS may be a cell-specific reference signal (Cell-specific reference signal, CRS), or a demodulation reference signal (Demodulation reference signal, DMRS) for specifically demodulating an enhanced physical downlink control channel (Enhanced Physical Downlink Control Channel, ePDCCH) of the control region.

> 102 includes: sending, by the base station, control information to a user equipment UE in the control region of the first subframe; and sending a data signal and/or an enhanced physical downlink control channel ePDCCH to the UE in the second subframe.

Based on the above 102, the UE may acquire the control information from the control region included in the first subframe, after receiving the first subframe.

In the existing technology, in long term evolution (long term evolution, LTE) system version 8, 9, or 10, each subframe includes a control region. The inventor finds out that only PCFICH is carried in the control region of a part of subframes. In this case, no useful control information is transmitted through the control region, while the system resource is still occupied, causing waste of resources. In an embodiment of the invention, the first subframe includes a control region, while the second subframe does not include the control region. Compared with a condition in the existing technology, overhead of the control region is reduced.

A new carrier type (new carrier type, NCT) is introduced in long term evolution advanced (long term evolution advanced, LTE-A) system version 11 or higher version. The new carrier type does not support data transmission and access for a UE in LTE of previous version, but supports data transmission and access for a UE in LTE system of new version, where LTE of previous version is an LTE with a version number lower than 11, and LTE of new version is an LTE with a version number not lower than 11. That is because the NCT may have no control region, i.e., an ePDCCH may be sent, rather than PDCCH. A UE supporting LTE system of new version may obtain PDSCH scheduling information by demodulating an ePDCCH, to further implement a process such as data transmission. In LTE-A system of version 11 or higher versions, a high layer signaling can not be demodulated, if only the ePDCCH is used to transmit the control information in the NCT. For example, a system information block (System Information Block, SIB) can not be demodulated. In addition, a UE supporting an LTE version 8, 9 or 10 can not be accessed or transfer data, through the NCT.

With the above solution, the first subframe includes a control region, a PDCCH may be sent in the control region, and thus it is ensured that a UE can demodulate a high layer signaling. In this way, it is ensured that a UE supporting LTE new version can demodulate an SIB according to a PDCCH, access a network supporting LTE new version, acquire configuration information of an ePDCCH, and then perform data transmission based on the ePDCCH.

Optionally, the solution of determining, by a base station, a first subframe and a second subframe, includes at least one of:

> determining, by the base station, a first subframe and a second subframe for each of at least two cells; or determining, by the base station, a first subframe and a second subframe for each of at least two carriers;
>
> determining, by the base station, a first subframe and a second subframe of a reference cell; determining that a first cell corresponds to the reference cell; determining a first subframe of the first cell as the first subframe of the reference cell; and determining a second subframe of the first cell as the second subframe of the reference cell, where the reference cell is a reference physical cell or a reference component carrier;

determining, by the base station, a first subframe and a second subframe of a reference cell; determining that a carrier corresponds to the reference cell; determining a first subframe of the first carrier as the first subframe of the reference cell; and determining a second subframe of the first carrier as the second subframe of the reference cell, where the reference cell is a reference physical cell or a reference component carrier.

Optionally, a method for sending configuration information of a subframe from the base station to the UE is provided in an embodiment of the invention. The method include at least one of:

after determining, by the base station, a first subframe and a second subframe for each of at least two cells, notifying, by the base station, the UE of subframe configuration information of each of the at least two cells, where the subframe configuration information of each cell includes: configuration information of the first subframe of the cell and/or configuration information of the second subframe of the cell;

after determining, by the base station, a first subframe and a second subframe for each of at least two carriers, notifying, by the base station, the UE of subframe configuration information of each of the at least two carriers, where the subframe configuration information of each carrier includes: configuration information of the first subframe of the carrier and/or configuration information of the second subframe of the carrier;

after determining, by the base station, a reference cell of a first cell, notifying, by the base station, the UE of a cell number or a carrier number of the reference cell of the first cell;

after determining, by the base station, a reference cell or a reference carrier of the first carrier, notifying, by the base station, the UE of a cell number or a carrier number of the reference cell of the first carrier.

Optionally, optional schemes of control information are also provided in an embodiment of the invention. In particular, the control information includes: at least one of a physical control format indicator channel PCFICH, a physical downlink control channel PDCCH, a physical hybrid automatic repeat request indicator channel (Physical HARQ Indicator Channel, PHICH), and an enhanced physical downlink control channel ePDCCH.

Optionally, the first subframe and the second subframe may be a subset of a first radio frame, where the first radio frame may include one or more second radio frames, and the second radio frame may include 10 subframes.

An implementation for transmitting above several options of the control information is given in an embodiment of the invention, which includes at least one of the following:

the sending, by the base station, control information to the UE in the control region includes: sending, by the base station, the ePDCCH to the UE in an enhanced common search space (enhanced- Common Search Space, eCSS) or an enhanced user equipment-specific search space (enhanced- UE specific Search Space, eUESS) of the control region, in the case that the control information includes the ePDCCH;

sending, by the base station, at least two PHICHes to the UE in the control region, in the case that the control information includes PHICHes, where each PHICH is adapted to indicate whether the UE transmits a PUSCH in a k-th subframe after a subframe carrying the PHICH, and where the at least two PHICHes correspond to different values of k, and k is a positive integer;

sending, by the base station, a PCFICH to the UE in the control region, in the case that the control information includes the PCFICH, where the PCFICH is adapted to identify the number of OFDM symbols occupied by the control region.

Optionally, in the above embodiment, the second subframe and/or the first subframe may be determined according to at least one of: requirement of a service and the type of the UE, or may be preset; which may be referred to for details in the following.

The base station determines a subframe including a system information block type 1 (System Information Block Type 1, SIB1) as the first subframe. The subframe including the SIB1 includes the control region, and the control information including scheduling information may be transmitted in the control region. Thus, the UE may receive the scheduling information of the SIB1 in the control region, and then receives the SIB1. In the existing technology, if the control information is transmitted via only the ePDCCH in NCT, the UE cannot know the configuration information of the ePDCCH, and thus cannot demodulate the high layer signaling correctly due to unacquirable control information. That is because the scheduling information in control information is adapted to demodulate a high layer signaling, and the configuration information of an ePDCCH is configured through the high layer signaling. In this embodiment, a subframe including an SIB1 includes a control region, and therefore, scheduling information for demodulating a high layer signaling may be obtained through scheduling information in the control region, solving the problem of the existing technology.

The base station determines that a subframe including a system information block type x (System Information Block Type x, SIBx) is the first subframe, where x is a natural number larger than 1. In this case, it can be ensured that the UE receives scheduling information of the SIBx in the control region, and then receives the SIBx.

The base station determines a multimedia broadcast multicast service over a single frequency network (Multimedia Broadcast Multicast Service over a Single Frequency Network, MBSFN) subframe as the first subframe. The MBSFN subframe may be used for transmitting multimedia broadcast multicast service (Multimedia Broadcast Multicast Service, abbreviated as MBMS), and the MBMS service occupies a full carrier bandwidth of the MBSFN subframe. In this case, the MBSFN subframe can not be used for transmitting the ePDCCH. Therefore, the base station determines the MBSFN subframe as the first subframe, and thus the UE can receive the PDCCH and/or the PHICH from the control region of the first subframe.

The base station determines a subframe carrying a channel state information reference signal (Channel State Information Reference Signal, CSI-RS) as the first subframe. Because the subframe carrying the CSI-RS may not be used for transmitting the ePDCCH, the base station determines that the subframe carrying the CSI-RS as the first subframe. Therefore, the UE may receive the PDCCH and/or the PHICH from the control region of the first subframe.

The base station determines a special subframe in subframe configurations 0 and 5 for time division duplexing (Time Division Duplexing, TDD) as the first subframe. Because the special subframe in subframe configurations 0 and 5 for TDD may not be used for transmitting the ePDCCH, the base station determines that the special subframe in subframe configurations 0 and 5 for TDD is the first subframe. Therefore, the UE may receive the PDCCH and/or the PHICH from the control region of the first subframe.

The base station determines a subframe carrying a physical multicast channel as the first subframe. Because the subframe carrying a physical multicast channel may not be used for transmitting the ePDCCH, the base station determines that the subframe carrying the physical multicast channel is the first subframe. Therefore, the UE may receive the PDCCH and/or the PHICH from the control region of the first subframe. In particular, the first subframe may also be a subframe for transmitting an MBMS service.

The base station determines a subframe carrying a random access response grant as the first subframe. In this case, it is ensured that the UE correctly receives the random access response grant.

The base station determines a subframe except for the second subframe as the first subframe. Accordingly, the base station determines a subframe except for the first subframe as the second subframe.

Preferably, a method for determining a bandwidth and/or a frequency domain position occupied by a control region is given in an embodiment of the invention. In particular, after the base station determines the first subframe and the second subframe, the method further includes:

determining, by the base station, a bandwidth and/or a frequency domain position occupied by the control region, according to predefined configuration information; or

determining, by the base station, a bandwidth and/or a frequency domain position occupied by the control region, according to a correspondence relationship between a cell identity and a resource occupied by the control region.

Optionally, after the base station determines the first subframe and the second subframe, the method further includes at least one of the follows.

The base station sends first configuration information to the UE through a system information block type 1, where the first configuration information includes: first time domain configuration information, and/or first frequency domain configuration information, where the first time domain configuration information is adapted to indicate a time domain position of the first subframe, and the first frequency domain configuration information is adapted to indicate a bandwidth and/or a frequency domain position occupied by the control region in the first subframe. For example, when a full bandwidth of the first subframe is used as the control region, the first configuration information may include only the first time domain configuration information. When the first subframe is a predefined subframe, the first configuration information may include only the first frequency domain configuration information.

The base station sends second configuration information to the UE through a system information block type x , where x is a natural number larger than 1, and the second configuration information includes: second time domain configuration information, and/or second frequency domain configuration information, where the second time domain configuration information is adaped to indicate a time domain position of the first subframe, and the second frequency domain configuration information is adapted to indicate a bandwidth and/or a frequency domain position occupied by the control region in the first subframe.

The base station sends third configuration information to the UE through a dedicated signaling of a radio resource control RRC, where the third configuration information includes: third time domain configuration information, and/or third frequency domain configuration information, where the third time domain configuration information is adapted to indicate a time domain position of the first subframe, and the third frequency domain configuration information is adapted to indicate a bandwidth and/or a frequency domain position occupied by the control region in the first subframe.

The base station sends fourth configuration information to the UE through a system information block type 1, where the fourth configuration information includes fourth time domain configuration information adapted to indicate a time domain position of the second subframe.

The base station sends fifth configuration information to the UE through a system information block type x, where x is a natural number larger than 1, and the fifth configuration information includes fifth time domain configuration information adapted to indicate a time domain position of the second subframe.

The base station sends sixth configuration information to the UE through a dedicated signaling of a radio resource control RRC, where the sixth configuration information includes sixth time domain configuration information adapted to indicate a time domain position of the second subframe.

The base station sends a high layer signaling to the UE, where the high layer signaling is adapted to indicate a bandwidth and/or a frequency domain position occupied by the control region. It can be understood that the high layer signaling may be a radio resource control (Radio Resource Control, RRC) signaling, or a media access control (Media Access Control, MAC) signaling.

A control format indicator CFI, carried in a physical control format indicator channel PCFICH sent from the base station to the UE in the first subframe, belongs to a first preset value set, and/or a CFI, carried in a PCFICH sent from the base station to the UE in the second subframe, is equal to a second preset value, where the second preset value does not belong to the first preset value set. In particular, the CFI carried in the PCFICH sent from the base station to the UE in the first subframe belongs to {1, 2, 3}, and the CFI carried in the PCFICH sent from the base station to the UE in the second subframe equals to 4 or 0, where the first preset value set is {1, 2, 3}, and the second preset value is 4 or 0. According to the embodiment, the UE may determine whether a subframe is a first subframe by determining whether the CFI carried in the PCFICH in the received subframe belongs to a first preset value set, so as to determine which subframes are used to receive the control information. The subframe with the control region can be rapidly determined according to the embodiment. It should be noted that, in the embodiment, the PCFICH is transmitted at the first OFDM symbol of each downlink subframe. Although the second subframe can also transmit a PCFICH, the PCFICH is not transmitted in the control region.

Optionally, a solution for accurately determining a position of a subframe is provided according to an embodiment of the invention. In particular, at least one of the first time domain configuration information, the second time domain configuration information, the third time domain configuration information, the fourth time domain configuration information, the fifth time domain configuration information and the sixth time domain configuration information includes a period and a subframe offset, or includes bitmap encoding. For example, the first time domain configuration information includes the period and the subframe offset, where the time domain position indicated by the first time domain configuration information is a subframe meeting the following condition:

$$(n - Offset)\mathrm{mod}(Period) = 0 .$$

Where, n is a subframe number, Period is the period, and Offset is the subframe offset. A case, that the second time domain configuration information, the third time domain configuration information, the fourth time domain configuration information, the fifth time domain configuration information, or the sixth time domain configuration information includes the period and the subframe offset, is similar to the above example, which will not be enumerated herein. For example, the first time domain configuration information includes the bitmap encoding, where the bitmap encoding includes M bits, where bits correspond, in a one-to-one manner, to subframes of a subframe set, where the subframe set includes M subframes. If a bit in the bitmap encoding is '1', a subframe corresponding to the bit is the first subframe. It should be noted that, in another implementation of the method, if a bit in the bitmap encoding is '0', a subframe corresponding to the bit is the first subframe. A case, that the second time domain configuration information, the third time domain configuration information, the fourth time domain configuration information, the fifth time domain configuration information, or the sixth time domain configuration information includes the bitmap encoding, is similar to the above example, which will not be enumerated herein.

Optionally, after the base station determines the first subframe and the second subframe, the method further includes:

mapping, starting from a first OFDM symbol of the second subframe, a downlink channel by the base station, where the downlink channel include a PDSCH and/or an ePDCCH, where a resource unit to which the downlink channel is mapped is different from a resource unit to which a PCFICH is mapped. In particular, the base station maps, starting from the first OFDM symbol of the second subframe, the PDSCH and/or the ePDCCH; and the PDSCH and/or the ePDCCH can not be mapped to an RE occupied by a PCFICH. For example, if the PCFICH is carried on the first OFDM symbol, the PDSCH abstains from the RE occupied by the PCFICH, and the PDSCH and/or the ePDCCH is mapped starting from the second OFDM symbol.

Optionally, after the base station determines the first subframe and the second subframe, the method further includes the follows.

The base station sends a PHICH and/or a PCFICH in the second subframe. The UE receiving the PHICH may be UE with a version number of 8, 9, 10, or 11, or a UE with a version number higher than 11. The UE performs a retransmission of uplink data according to the PHICH. Furthermore, the base station maps, starting from the first OFDM symbol of the second subframe, the downlink channel; where the downlink channel include the PDSCH and/or the ePDCCH, where a resource unit to which the downlink channel is mapped does not include a resource unit to which a PHICH is mapped. The resource unit may be a resource element, a resource element group (Resource Element Group, REG), or a resource block (Resource Block, RB). In particular, the base station maps, starting from the first OFDM symbol of the second subframe, a PDSCH and/or an ePDCCH, and the PDSCH and/or the ePDCCH can not be mapped to an RE occupied by a PHICH. According to the embodiment, a UE may receive the PHICH in the second subframe without the control region, and then perform a data retransmission. In addition, the downlink data may be mapped to an OFDM symbol carrying the PHICH, and thus an efficiency of resource utilization is improved, overhead is reduced, and a system throughput is improved.

The base station sends a PCFICH in the second subframe. The UE receiving the PCFICH may be UE with a version number of 8, 9, 10, or 11. The UE determines a starting symbol of the current subframe which is mapped to the PDSCH and/or the ePDCCH, according to the PCFICH. Preferably, the base station maps, starting from the first OFDM symbol of the second subframe, a downlink channel, where the downlink channel include a PDSCH and/or an ePDCCH, where a resource unit to which the downlink channel is mapped does not include a resource unit to which a PCFICH is mapped. The resource unit may be a resource element, a resource element group (Resource Element Group, REG), or a resource block (Resource Block, RB). In particular, the base station maps, starting from the first OFDM symbol of the second subframe, the PDSCH and/or the ePDCCH, and the PDSCH and/or the ePDCCH can not be mapped to an RE occupied by a PHICH. The UE receiving the downlink channel may be UE with a version number higher than 11. Preferably, a control format indicator CFI, carried in a physical control format indicator channel PCFICH sent from the base station to the UE in the first subframe, belongs to a first preset value set, and/or a CFI, carried in a PCFICH sent from the base station to the UE in the second subframe, belongs to a first preset value set. In particular, the CFI carried in the PCFICH broadcasted in the first subframe by the base station belongs to {1, 2, 3}, and the CFI carried in the PCFICH broadcasted in the second subframe by the base station also belongs to {1, 2, 3}, where the first preset value set is {1, 2, 3}. According to the embodiment, the UE with a version number of 8, 9, 10, or 11 can receive the PCFICH in the second subframe without the control region, so as to avoid affecting the UE with the version number of 8, 9, 10, or 11 due to the lack of the PCFICH. In addition, downlink data may be mapped to an OFDM symbol carrying the PCFICH, thus the efficiency of resource utilization is improved, the overhead is reduced, and the system throughput is improved.

The base station sends a PHICH and a PCFICH in the second subframe. The UE for receiving the PHICH may be a UE with a version number of 8, 9, 10, or 11, or a UE with a version number higher than 11. The UE performs a retransmission of uplink data according to the PHICH. The UE for receiving the PCFICH may be a UE with a version number of 8, 9, 10, or 11. The UE determines, according to the PCFICH, a starting symbol of the current subframe which is mapped to the PDSCH and/or the ePDCCH. Preferably, the base station maps, starting from the first OFDM symbol of the second subframe, a downlink channel, where the downlink channel include the PDSCH and/or the ePDCCH, where a resource unit to which the downlink channel is mapped does not include a resource unit to which the PHICH is mapped and a resource unit to which the PCFICH is mapped. The resource unit may be a resource element, a resource element group (Resource Element Group, REG), or a resource block (Resource Block, RB). In particular, the base station maps, starting from the first OFDM symbol of the second subframe, the PDSCH and/or the ePDCCH, and the PDSCH and/or the ePDCCH can not be mapped to the RE occupied by the PHICH or the RE occupied by the PCFICH. The UE for receiving the downlink channel may be a UE with a version number higher than 11. Preferably, a control format indicator CFI, carried in a physical control format indicator channel PCFICH sent in the first subframe by the base station, belongs to a first preset value set, and/or a CFI, carried in a PCFICH sent in the second subframe by the base station, belongs to a first preset value set. In particular, the CFI carried in the PCFICH broadcasted in the first subframe by the base station belongs to {1, 2, 3}, and the CFI carried in the PCFICH broadcasted in the second subframe by the base station also belongs to {1, 2, 3}, where the first preset value set is {1, 2, 3}. According to the embodiment, the UE can receive the PCFICH in the second subframe without the control region, and thus performs the retransmission of uplink data. In addition, the UE with a version number of 8, 9, 10, or 11 can also receive the PCFICH in the second subframe without a control region, so as to avoid affecting the UE with the version number of 8, 9, 10, or 11 due to the lack of the PCFICH. In addition, downlink data may be mapped to an OFDM symbol carrying the PCFICH and the PCFICH, thus the efficiency of resource utilization is improved, the overhead is reduced, and the system throughput is improved.

The resource unit to which the PHICH is mapped includes: a resource unit to which the PHICH is mapped, which is configured to the UE by the base station via a broadcast channel or a high layer signaling. In particular, PHICH configuration information includes a PHICH duration (phich-Duration) and a PHICH resource (phich-Resource).

Preferably, the determining a second subframe by the base station includes:

determining, by the base station, all downlink subframes as the second subframe; or determining, by the base station, all downlink subframes as the second subframe, and notifying the UE that all downlink subframes are the second subframes via a high layer signaling.

In the following embodiment, for example, the first subframe is a subframe with an SIB1. The subframe with the SIB1 includes a control region, which can ensure that the UE supporting a previous LTE version demodulates an SIB according to the PDCCH, to access a network supporting a new LTE version and then perform data transmission. A subframe of the SIB1 includes the control region, which can ensure that the UE supporting a new LTE version demodulates an SIB according to the PDCCH, to access a network supporting a new LTE version, acquire ePDCCH configuration information, and then perform data transmission based on the ePDCCH. Therefore, both the UE supporting a previous LTE version and the UE supporting a new LTE version can obtain scheduling information with the embodiment of the invention, to perform the data transmission.

The above embodiments are described in detail from a base station side in a manner of a dynamic processing flow. Next, the following is described in detail from a view of static configuration of the above embodiments.

A base station determines a first subframe, where the first subframe is a subframe with a control region.

The base station sends control information to a UE through the control region of the first subframe. Preferably, the UE may obtain scheduling information from the control information.

The base station determines a second subframe, where the second subframe is a subframe with no control region.

The first subframe is a subset of a first radio frame. The second subframe is also a subset of the first radio frame. The base station can not send control information in the second subframe.

The control information may include at least one of: a physical control format indicator channel (Physical Control Format Indicator Channel, PCFICH), a physical downlink control channel (Physical Downlink Control Channel, PDCCH), a physical hybrid automatic repeat request indicator channel (Physical HARQ Indicator Channel, PHICH), and an enhanced physical downlink control channel (enhanced Physical Downlink Control Channel, ePDCCH).

If the PHICH is sent, a solution may include: sending, by a base station, at least one PHICH to a UE through only the control region of the first subframe, where different PHICHes correspond to different downlink subframes. The second subframe may be a subframe, other than the first subframe, in the first radio frame.

In addition, the first radio frame may include multiple second radio frames, where the second radio frame may include 10 subframes.

A method for determining a first subframe may include at least one of the follows.

The first subframe is a subframe including a system information block type 1 (System Information Block Type 1, SIB1). Preferably, the base station may send first configuration information to the UE through the SIB1. At the UE side, the first subframe is a subframe indicated by the first configuration information.

The first subframe is a subframe including a system information block type x (System Information Block Type x, SIBx), where x is a natural number larger than 1. Preferably, the base station sends second configuration information to the UE through the SIBx. At the UE side, the first subframe is a subframe indicated by the second configuration information.

A solution for indicating a first subframe through a high layer signaling by the base station is also provided according to the embodiment. The solution includes: sending third configuration information to the UE, through a dedicated signaling of a radio resource control (Radio Resource Control RRC) by the base station. At the UE side, the first subframe is a subframe indicated by the third configuration information

By summarizing the above possible implementations and other possible solutions, the first subframe is at least one of:

(1). the subframe including the SIB1;

(2). the subframe indicated by the first configuration information;

(3). the subframe including the SIBx;

(4). the subframe indicated by the second configuration information;

(5). the subframe indicated by the third configuration information;

(6). the multimedia broadcast multicast service over a single frequency network MBSFN subframe;

(7). the subframe carrying a channel state information reference signal CSI-RS;

(8). a special subframe in subframe configurations 0 and 5 for time division duplexing TDD;

(9). a physical multicast channel subframe;

(10). a subframe including random access response grant (Random Access Response Grant).

A solution for notifying the UE of a position of the first subframe may include the follows. At least one of the first configuration information, the second configuration information, and the third configuration information includes a period and a subframe offset. Alternatively, at least one of the first configuration information, the second configuration information, and the third configuration information includes bitmap encoding. The position of the first subframe is notified to the UE through at least one of the first configuration information, the second configuration information, and the third configuration information. For example, the first time domain configuration information includes a period and subframe offset, a time domain position indicated by the first time domain configuration information is a subframe meeting the following condition: $(n\text{-}Offset)\mathrm{mod}(Period)=0$; where, n is a subframe number, Period is the period, and Offset is the subframe offset. A case, that the second time domain configuration information, the third time domain configuration information, the fourth time domain configuration information, the fifth time domain configuration information, or the sixth time domain configuration information includes a period and subframe offset, is similar to the above example, which will not be enumerated herein. For example, the first time domain configuration information includes the bitmap encoding, where the bitmap encoding includes M bits, where the bits correspond, in a one-to-one manner, to subframes of a subframe set, where the subframe set includes M subframes. If a bit in the bitmap encoding is '1', a subframe corresponding to the bit is the first subframe. It should be noted that, in another implementation of the method, if a bit in the bitmap encoding is '0', a subframe corresponding to the bit is the first subframe. A case, that the second time domain configuration information, the third time domain configuration information, the fourth time domain configuration information, the fifth time domain configuration information, or the sixth time domain configuration information includes the bitmap encoding, is similar to the above example, which will not be enumerated herein.

After the first subframe or the frequency domain position thereof is determined, a solution for sending the ePDCCH by the base station, or a solution for obtaining the ePDCCH from a corresponding UE side may include:

sending an ePDCCH to the UE by the base station through an enhanced common search space (enhanced- Common Search Space, eCSS), if the control region of the first subframe includes the eCSS; or sending an ePDCCH to the UE by the base station through an enhanced user equipment specific search space (enhanced- UE specific Search Space, eUESS), if the control region of the first subframe includes the eUESS. The UE may demodulate the ePDCCH according to a cell-specific reference signal (Cell-specific Reference Signal, CRS).

After determining the second subframe, the base station may notify the UE of configuration information of the second subframe. The base station may notify the UE of the configuration information of the second subframe by at least one of:

sending, by the base station, fourth configuration information to the UE through an SIB1, where the second subframe is a subframe indicated by the fourth configuration information;

sending, by the base station, fifth configuration information to the UE through an SIBx, where the second subframe is a subframe indicated by the fifth configuration information; and

sending, by the base station, sixth configuration information to the UE through a dedicated signaling of a radio resource control (Radio Resource Control, RRC), where the second subframe is a subframe indicated by the sixth configuration information.

By summarizing the above possible implementations and other possible implementations, the second subframe is at least one of:

(1). a subframe other than the first subframe;

(2). a subframe indicated by the fourth configuration information;

(3). a subframe indicated by the fifth configuration information;

(4). a subframe indicated by the sixth configuration information.

In an embodiment of the invention, a solution for determining, by the UE, the number of OFDM symbols occupied by the control region may be as follows.
The UE determines the number of OFDM symbols occupied by the control region, according to the received PCFICH, or the number of OFDM symbols occupied by the control region is a predefined positive integer. It should be noted that the control information does not include PCFICH, if the number of OFDM symbols occupied by the control region is the predefined positive integer.
Preferably, in an embodiment of the invention, after determining the bandwidth and/or the frequency domain position occupied by the control region, the base station may notify the UE of the bandwidth and/or the frequency domain position occupied by the control region. The notification method may include: notifying, through a high layer signaling, the UE of the bandwidth and/or the frequency domain position occupied by the control region.

Preferably, the determining the bandwidth and/or the frequency domain position occupied by the control region may include: predefining the bandwidth and/or the frequency domain position occupied by the control region, or determining the bandwidth and/or the frequency domain position occupied by the control region according to a cell identity. For example, the bandwidth and/or the frequency domain position occupied by the control region are predefined, or are determined from the cell identity. For example, there is a correspondence relationship between the cell identity and the bandwidth and/or the frequency domain position occupied by the control region. The correspondence relationship may be a one to one correspondence, a one to many correspondence, a many to one correspondence, or a many to many correspondence. The correspondence relationship may be presented in a correspondence table.

Preferably, in the case that the first subframe is a subframe including an SIB1 and/or a subframe including an SIBx, the bandwidth and/or the frequency domain position occupied by the control region are predefined, or are determined through a cell identity. In particular, the above first configuration information, second configuration information, and third configuration information further include configuration information of the bandwidth and/or the frequency domain position occupied by the control region of the first subframe, which is indicated by the first configuration information, the second configuration information, and the third configuration information. Preferably, the base station sends seventh configuration information to the UE through an SIB1, an SIB2 or a dedicated signaling of an RRC, where the seventh configuration information is adapted to indicate the bandwidth and/or the frequency domain position occupied by the control region of the first subframe.

Preferably, the control region may include a first control region and a second control region, where the bandwidth and/or the frequency domain position occupied by the first control region are predefined, or determined from the cell identity, and the bandwidth and/or the frequency domain position occupied by the second control region is notified to the UE through the high layer signaling.

Another method for sending control information is further provided in an embodiment of the invention, which is implemented at user equipment. As shown in Fig. 2, the method includes the follows.

201 includes: receiving, by a user equipment UE, a first subframe or a second subframe from a base station, where the first subframe is a subframe with a control region, and the second subframe is a subframe with no control region; and determining, by the UE, the first subframe and the second subframe.

Optionally, the control region includes: all resource elements REs of first n orthogonal frequency division multiplexing OFDM symbols of the first subframe, except for a reference signal RS, where n is an integer ranged from 1 to 4; or a part of REs of first n OFDM symbols of the first subframe, except for an RS, where n is an integer ranged from 1 to 4.

Preferably, the determining, by the UE, a first subframe includes at least one of:

receiving, by the UE, subframe configuration information of each of at least two cells from the base station, where the subframe configuration information of each cell includes: configuration information of the first subframe of the cell and/or configuration information of the second subframe of the cell; and determining the first subframe according to the subframe configuration information;

receiving, by the UE, subframe configuration information of each of at least two carriers from the base station, where the subframe configuration information of each carrier includes: configuration information of the first subframe of the carrier and/or configuration information of the second subframe of the carrier; and determining the first subframe according to the subframe configuration information;

receiving, by the UE, a cell number or a carrier number of a reference cell of a first cell from the base station; and determining a first subframe of the first cell as a subframe of the reference cell; and

receiving, by the UE, a cell number or a carrier number of a reference cell of a first carrier from the base station; and determining a first subframe of the first carrier as a subframe of the reference cell.

Optionally, a method for acquiring subframe configuration information by the UE is further provided according to an embodiment of the invention. The method further includes at least one of the follows.

After the base station determines the first subframe and the second subframe for each of at least two cells, the UE receives subframe configuration information of each of the at least two cells, where the subframe configuration information includes: configuration information of the first subframe and/or configuration information of the second subframe.

After the base station determines the first subframe and the second subframe for each of at least two carriers, the UE receives subframe configuration information of each of the at least two carriers, where the subframe configuration information includes: configuration information of the first subframe and/or configuration information of the second subframe.

After the base station determines a reference cell of a first cell, the UE receives a cell number or a carrier number of the reference cell of the first cell.

After the base station determines a reference cell or a reference carrier of the first carrier, the UE receives a cell number or a carrier number of the reference cell of the first carrier.

The determining the first subframe by the UE further provided in the embodiment of the invention includes at least one of:

> determining, by the UE, a subframe including a system information block type 1 as the first subframe;
>
> determining, by the UE, a subframe including a system information block type x as the first subframe, where x is a natural number larger than 1;
>
> determining, by the UE, a multimedia broadcast multicast service over a single frequency network MBSFN subframe as the first subframe;
>
> determining, by the UE, a subframe carrying a channel state information reference signal CSI-RS as the first subframe;
>
> determining, by the UE, a special subframe in subframe configurations 0 and 5 for time division duplexing TDD as the first subframe;
>
> determining, by the UE, a subframe carrying a physical multicast channel as the first subframe;
>
> determining, by the UE, a subframe carrying a random access response grant as the first subframe;
>
> determining, by the UE, the second subframe; and determining a downlink subframe other than the second subframe as the first subframe.

A solution for determining, by a UE, a bandwidth and/or a frequency domain position occupied by the control region is further provided according to an embodiment of the invention. In particular, after the UE determines the first subframe, the solution further includes:

> determining, by the UE, a bandwidth and/or a frequency domain position occupied by the control region, according to predefined configuration information; or determining, by the UE, a bandwidth and/or a frequency domain position occupied by the control region, according to a correspondence relationship between a cell identity and a resource occupied by the control region.

202 includes: acquiring, by the UE, control information from the control region of the first subframe, and acquiring a data signal and/or an enhanced physical downlink control channel ePDCCH from the second subframe.

In addition, the UE may also acquire an enhanced physical downlink control channel ePDCCH from the second subframe.

Related scheduling information may be obtained from the control information. The acquired scheduling information may be used for a process such as data transmission, which will not be limited in the embodiment of the invention.

In the embodiment of the invention, the first subframe includes the control region, and the second subframe does not include the control region, rather than all subframes include control regions. In this way, the system overhead is reduced.

With the above solution, the first subframe includes the control region, and the PDCCH can be sent through the control region. Thus, it is ensured that the UE can demodulate a high layer signaling. Then, a UE supporting a new LTE version is ensured to demodulate an SIB based on the PDCCH, to access a network supporting a new LTE version, acquire configuration information of the ePDCCH, and then perform data transmission based on the ePDCCH.

Optionally, the control information includes at least one of: a physical control format indicator channel PCFICH, a physical downlink control channel PDCCH, a physical hybrid automatic repeat request indicator channel PHICH, and an enhanced physical downlink control channel ePDCCH.

Based on the above options of the control information, the acquiring, by the UE, control information included in the control region includes the follows.

The acquiring, by the UE, control information from the control region of the first subframe, includes at least one of:

> acquiring, by the UE, the ePDCCH from an enhanced common search space eCSS or an enhanced user equipment specific search space eUESS of the control region, in the case that the control information includes the ePDCCH;
>
> acquiring, by the UE, at least two PHICHes from the control region, in the case that the control information includes the PHICH, where each PHICH is adapted to indicate whether the UE transmits a PUSCH in a k-th subframe after a subframe carrying the PHICH, where the at least two PHICHes correspond to different values of k, and k is a positive integer;
>
> acquiring, by the UE, the PCFICH from the control region, in a case that the control information includes the PCFICH, where the PCFICH is adapted to identify the number of OFDM symbols occupied by the control region.

More particularly, the determining a first subframe by the UE includes at least one of the following:

the UE acquires first configuration information from a system information block type 1, and determines the first subframe based on the first configuration information, where the first configuration information includes: first time domain configuration information, and/or first frequency domain configuration information, where the first time domain configuration information is adapted to indicate a time domain position of the first subframe, and the first frequency domain configuration information is adapted to indicate a bandwidth and/or a frequency domain position occupied by the control region of the first subframe;

the UE acquires second configuration information from a system information block type x, and determines the first subframe based on the second configuration information, where x is a natural number larger than 1, the second configuration information includes: second time domain configuration information, and/or second frequency domain configuration information, where the second time domain configuration information is adapted to indicate a time domain position of the first subframe, and the second frequency domain configuration information is adapted to indicate a bandwidth and/or a frequency domain position occupied by the control region of the first subframe;

the UE acquires third configuration information from a dedicated signaling of a radio resource control RRC, and determines the first subframe based on the third configuration information, the third configuration information includes: third time domain configuration information, and/or third frequency domain configuration information, where the third time domain configuration information is adapted to indicate a time domain position of the first subframe, and the third frequency domain configuration information is adapted to indicate a bandwidth and/or a frequency domain position occupied by the control region of the first subframe;

the UE acquires fourth configuration information from a system information block type 1, determines the second subframe based on the fourth configuration information, and determines that a downlink subframe in a radio frame other than the second subframe is the first subframe, where the fourth configuration information includes fourth time domain configuration information adapted to indicate a time domain position of the second subframe;

the UE acquires fifth configuration information from a system information block type x, determines the second subframe based on the fifth configuration information, and determines that a downlink subframe in a radio frame other than the second subframe is the first subframe, where x is a natural number larger than 1, and the fifth configuration information includes fifth time domain configuration information adapted to indicate a time domain position of the second subframe;

the UE acquires sixth configuration information from a dedicated signaling of a radio resource control RRC, determines the second subframe based on the sixth configuration information, and determines that a downlink subframe in the radio frame other than the second subframe is the first subframe, where the sixth configuration information includes sixth time domain configuration information adapted to indicate a time domain position of the second subframe;

the UE receives a high layer signaling, and determines the control region of the first subframe based on the high layer signaling, where the high layer signaling is adapted to indicate a bandwidth and/or a frequency domain position occupied by the control region;

in a case that a control format indicator CFI, carried in a PCFICH of a subframe, belongs to a first preset value set, the UE determines the subframe as the first subframe; and/or in a case that a CFI carried in a PCFICH of a subframe is equal to a second preset value, the UE determines that the subframe is the second subframe, where the second preset value does not belong to the first preset value set. For example, the first preset value set is {1, 2, 3}, and the second preset value is 4 or 0.

Optionally, a solution for determining a position of a first subframe is further provided according to an embodiment of the invention. In the solution, at least one of the first time domain configuration information, the second time domain configuration information, the third time domain configuration information, the fourth time domain configuration information, the fifth time domain configuration information and the sixth time domain configuration information includes a period and a subframe offset. The UE determines the time domain position of the first subframe based on the period and the subframe offset.

Alternatively, at least one of the first time domain configuration information, the second time domain configuration information, the third time domain configuration information, the fourth time domain configuration information, the fifth time domain configuration information and the sixth time domain configuration information includes bitmap encoding. The UE determines the time domain position of the first subframe based on the bitmap encoding.

Optionally, after the UE receives the first subframe and the second subframe sent from the base station, the method further includes: determining the second subframe by the UE; and
acquiring, by the UE and starting from a first OFDM symbol of the second subframe, a physical downlink shared channel PDSCH and/or an ePDCCH; or acquiring, by the UE and starting from a first OFDM symbol of the second subframe, a downlink channel, where the downlink channel includes: a PDSCH and/or an ePDCCH, where a resource unit occupied by the downlink channel is different from a resource unit occupied by a PCFICH.

Optionally, after the determining the first subframe and the second subframe by the UE, the method further includes: receiving, by the UE, a PHICH and/or PCFICH sent in the second subframe; and/or further includes: receiving, by the UE, a downlink channel which is mapped starting from a first OFDM symbol of the second subframe, where the downlink channel includes: a PDSCH and/or an ePDCCH, where a resource unit to which the downlink channel is mapped does not include a resource unit to which a PHICH is mapped or a resource unit to which a PCFICH is mapped.

Optionally, the resource unit to which the PHICH is mapped include: a resource unit to which the PHICH is mapped, which is configured by the base station and received by the UE via a broadcast channel.

Optionally, after the determining the first subframe and the second subframe by the UE, the method further includes: receiving, by the UE, a physical control format indicator channel PCFICH sent in the first subframe, where the PCFICH carries a control format indicator CFI belonging to a first preset value set, and/or receiving, by the UE, a PCFICH which is sent by the UE in the second subframe, where the PCFICH carries a CFI belonging to the first preset value set.

Optionally, the determining a second subframe by the UE includes: receiving, by the UE, a high layer signaling from the base station, where the high layer signaling is for indicating that all downlink subframes are the second subframes.

A base station is further provided in an embodiment of the invention. As shown in Fig. 3, the base station includes:

a subframe determining unit 301, adapted to determine a first subframe and a second subframe, where the first subframe is a subframe with a control region, and the second subframe is a subframe with no control region; and

a sending unit 302, adapted to send, through the control region of the first subframe determined by the subframe determining unit 301, control information to a user equipment UE, and to send, in the second subframe, a data signal and/or an enhanced physical downlink control channel ePDCCH to the UE.

Optionally, the subframe determining unit 301 is adapted to determine the first subframe by at least one of the following means:

determining a subframe including a system information block type 1, as the first subframe;

determining a subframe including a system information block type x, as the first subframe, where x is a natural number larger than 1;

determining a multimedia broadcast multicast service over a single frequency network MBSFN subframe, as the first subframe;

determining a subframe carrying a channel state information reference signal CSI-RS, as the first subframe;

determining a special subframe in subframe configurations 0 and 5 for time division duplexing TDD, as the first subframe;

determining a subframe carrying a physical multicast channel, as the first subframe;

determining a subframe carrying a random access response grant, as the first subframe;

determining the second subframe, and determining a downlink subframe in a radio frame other than the second subframe as the first subframe.

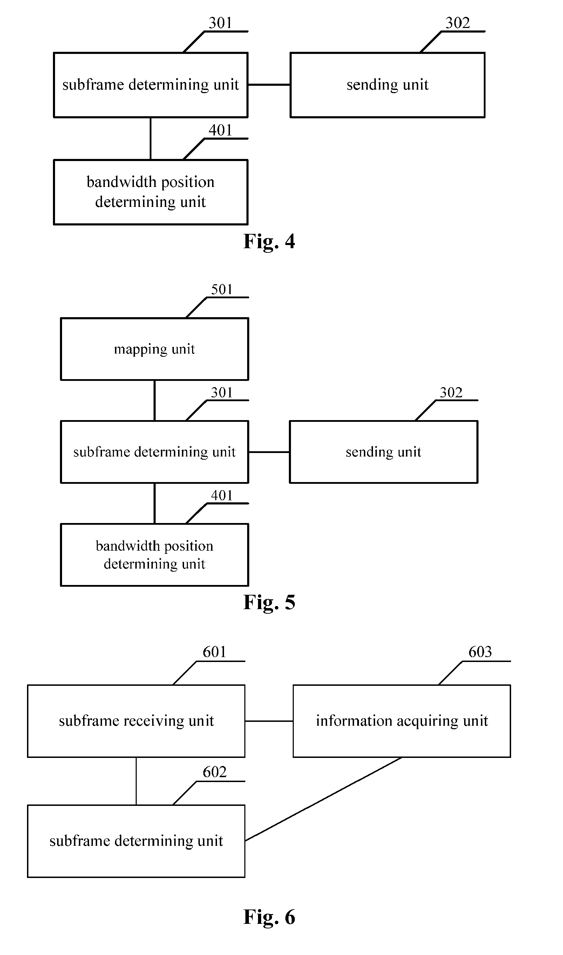

Optionally, as shown in Fig. 4, the base station further includes:

a bandwidth position determining unit 401, adapted to determine, according to predefined configuration information, a bandwidth and/or a frequency domain position occupied by the control region or to determine, according to a correspondence relationship between a cell identity of a cell corresponding to the base station and a resource occupied by the control region, a bandwidth and/or a frequency domain position occupied by the control region, after the subframe determining unit 301 determines the first subframe and the second subframe, and

the sending unit 302 is adapted to send control information to the UE, by using the bandwidth and/or frequency domain position occupied by the control region determined by the bandwidth position determining unit 401.

Optionally, after the subframe determining unit 301 determines the first subframe and the second subframe, the sending unit 302 is further adapted to perform at least one of:

sending, through a system information block type 1, first configuration information to the UE, where the first configuration information includes first time domain configuration information and/or first frequency domain configuration information, where the first time domain configuration information is for indicating a time domain position of the first subframe, and the first frequency domain configuration information is for indicating a bandwidth and/or a frequency domain position occupied by the control region of the first subframe;

sending, through a system information block type x, second configuration information to the UE, where x is a natural number larger than 1, and the second configuration information includes second time domain configuration information and/or second frequency domain configuration information, where the second time domain configuration information is for indicating a time domain position of the first subframe, and the second frequency domain configuration information is for indicating a bandwidth and/or a frequency domain position occupied by the control region of the first subframe;

sending, through a dedicated signaling of a radio resource control RRC, third configuration information to the UE, where the third configuration information includes third time domain configuration information and/or third frequency domain configuration information, where the third time domain configuration information is for indicating a time domain position of the first subframe, and the third frequency domain configuration information is for indicating a bandwidth and/or a frequency domain position occupied by the control region of the first subframe;

sending, through a system information block type 1, fourth configuration information to the UE, where the fourth configuration information includes fourth time domain configuration information adapted to indicate a time domain position of the second subframe;

sending, through a system information block type x, fifth configuration information to the UE, where x is a natural number larger than 1, and the fifth configuration information includes fifth time domain configuration information adapted to indicate a time domain position of the second subframe;

sending, through a dedicated signaling of a radio resource control RRC, sixth configuration information to the UE, where the sixth configuration information includes sixth time domain configuration information adapted to indicate a time domain position of the second subframe;

sending a high layer signaling to the UE, where the high layer signaling is for indicating a bandwidth and/or a frequency domain position occupied by the control region;

sending, in the first subframe, a physical control format indicator channel PCFICH carrying a control format indicator CFI belonging to a first preset value set, to the UE, and/or sending, by the base station to the UE in the first subframe, a PCFICH carrying a CFI which is equal to a second preset value, where the second preset value does not belong to the first preset value set.

Optionally, at least one of the first time domain configuration information, the second time domain configuration information, the third time domain configuration information, the fourth time domain configuration information, the fifth time domain configuration information and the sixth time domain configuration information, sent by the sending unit 302, includes: a period and a subframe offset, or includes bitmap encoding.

Optionally, the control region used by the sending unit 302 includes:

all resource elements REs of first n orthogonal frequency division multiplexing OFDM symbols of the first subframe, except for a reference signal RS, where n is an integer ranged from 1 to 4; or

a part of REs of first n orthogonal frequency division multiplexing OFDM symbols of the first subframe, except for an RS, where n is an integer ranged from 1 to 4.

Optionally, the subframe determining unit 301 is adapted to determine a first subframe and a second subframe by at least one of the following:

determining, by the subframe determining unit 301, a first subframe and a second subframe for each of at least two cells; or, determining, by the base station, a first subframe and a second subframe for each of at least two carriers;

determining, by the subframe determining unit 301, a first subframe and a second subframe of a reference cell, determining that a first cell to correspond to the reference cell, determining a first subframe of the first cell as the first subframe of the reference cell, and determining a second subframe of the first cell as the second subframe of the reference cell, where the reference cell is a reference physical cell or a reference component carrier;

determining, by the subframe determining unit 301, a first subframe and a second subframe of a reference cell, determining that a carrier corresponds to the reference cell, determining a first subframe of the first carrier as the first subframe of the reference cell, and determining a second subframe of the first carrier as the second subframe of the reference cell, where the reference cell is a reference physical cell or a reference component carrier.

Optionally, the sending unit 302 is further adapted to perform at least one of:

after determining, by the subframe determining unit 301, a first subframe and a second subframe for each of at least two cells, notifying the UE of subframe configuration information of each of the at least two cells, where the subframe configuration information of each cell includes: configuration information of the first subframe of the cell and/or configuration information of the second subframe of the cell;

after determining, by the subframe determining unit 301, a first subframe and a second subframe for each of at least two carriers, notifying the UE of subframe configuration information of each of the at least two carriers, where the subframe configuration information of each carrier includes: configuration information of the first subframe of the carrier and/or configuration information of the second subframe of the carrier;

after determining, by the subframe determining unit 301, a reference cell of a first cell, notifying the UE of a cell number or a carrier number of the reference cell of the first cell;

after determining, by the subframe determining unit 301, a reference cell or a reference carrier of the first carrier, notifying the UE of a cell number or a carrier number of the reference cell of the first carrier.

Optionally, the control information sent by the sending unit 302 includes at least one of: a physical control format indicator channel PCFICH, a physical downlink control channel PDCCH, a physical hybrid automatic repeat request indicator channel PHICH, and an enhanced physical downlink control channel ePDCCH.

Optionally, the sending unit 302 is adapted to send, through the control region, control information to the UE by at least one of the following:

sending, in an enhanced common search space eCSS or an enhanced user equipment specific search space eUESS of the control region, an ePDCCH to the UE by the sending unit 302, in the case that the control information includes the ePDCCH;

sending, through the control region, at least two PHICHes to the UE by the sending unit 302, where each PHICH is for indicating to the UE whether a PUSCH is transmitted in a k-th subframe after a subframe carrying the PHICH, in the case that the control information includes PHICHes, where the at least two PHICHes correspond to different values of k, and k is a positive integer;

sending, through the control region, a PCFICH to the UE by the sending unit 302, in the case that the control information includes the PCFICH, where the PCFICH is adapted to identify the number of OFDM symbols occupied by the control region.

Optionally, as shown in Fig. 5, the base station further includes:

a mapping unit 501, adapted to map, starting from a first OFDM symbol of the second subframe, a physical downlink shared channel PDSCH and/or an ePDCCH, or to map, starting from a first OFDM symbol of the second subframe, a downlink channel, after the subframe determining unit 301 determines the first subframe and the second subframe; where the down link channel includes a PDSCH and/or an ePDCCH, and a resource unit to which the downlink channel is mapped is different from a resource unit to which a PCFICH is mapped.

Optionally, the sending unit 302 is further adapted to send a PHICH and/or PCFICH in the second subframe, and/or to map, starting from a first OFDM symbol of the second subframe, a downlink channel, after the subframe determining unit 301 determines the first subframe and the second subframe, where the down link channel includes a PDSCH and/or an ePDCCH, and a resource unit to which the downlink channel is mapped does not include a resource unit to which a PHICH is mapped or a resource unit to which a PCFICH is mapped.

Optionally, the resource unit to which a PHICH is mapped by the sending unit 302 is a resource unit to which the PHICH is mapped, configured to the UE via a broadcast channel.

Optionally, the sending unit 302 is further adapted to send, in the first subframe, a physical control format indicator channel PCFICH carrying a control format indicator CFI belonging to a first preset value set, and/or to send, in the second subframe, a PCFICH sent by the UE and carrying a CFI belonging to the first preset value set, after the first subframe and the second subframe are determined.

Optionally, the subframe determining unit 301 is adapted to determine all downlink subframes as second subframes; or,
the sending unit 302 is adapted to notify the UE via a high layer signaling that all downlink subframes are second subframes, if the subframe determining unit 301 determines all downlink subframes as second subframes.

A user equipment is provided in an embodiment of the invention, including:

a subframe receiving unit 601, adapted to receive a first subframe and a second subframe sent by a base station, where the first subframe is a subframe with a control region, and the second subframe is a subframe with no control region;

a subframe determining unit 602, adapted to determine the first subframe and the second subframe received by the subframe receiving unit 601; and

an information acquiring unit 603, adapted to acquire control information from the control region of the first subframe determined by the subframe determining unit 602, and to acquire a data signal and/or an enhanced physical downlink control channel ePDCCH from the second subframe.

It can be understood that the subframe determining unit 602 may be connected to the information acquiring unit 603, in order that the information acquiring unit 603 acquires control information in the control region of the first subframe determined by the subframe determining unit 602.

Optionally, the control region of the first subframe received by the subframe receiving unit 601 includes: all resource elements REs of first n orthogonal frequency division multiplexing OFDM symbols of the first subframe, except for a reference signal RS, where n is an integer ranged from 1 to 4; or a part of REs of first n orthogonal frequency division multiplexing OFDM symbols of the first subframe, except for an RS, where n is an integer ranged from 1 to 4.

Optionally, the subframe determining unit 602 determines the first subframe by at least one of:

receiving, by the subframe determining unit 602, subframe configuration information of each of at least two cells sent by the base station, where the subframe configuration information of each cell includes: configuration information of the first subframe of the cell and/or configuration information of the second subframe of the cell; and determining the first subframe according to the subframe configuration information;

receiving, by the subframe determining unit 602, subframe configuration information of each of at least two carriers sent by the base station, where the subframe configuration information of each carrier includes: configuration information of the first subframe of the carrier and/or configuration information of the second subframe of the carrier; and determining the first subframe according to the subframe configuration information;

receiving, by the subframe determining unit 602, a cell number or a carrier number of a reference cell of a first cell from the base station, and determining a subframe of the reference cell as a first subframe of the first cell;

receiving, by the subframe determining unit 602, a cell number or a carrier number of a reference cell of a first carrier sent by the base station, and determining a subframe of the reference cell as a first subframe of the first carrier.

Optionally, the control information acquired by the information acquiring unit 603 includes at least one item of: a physical control format indicator channel PCFICH, a physical downlink control channel PDCCH, a physical hybrid automatic repeat request indicator channel PHICH, and an enhanced physical downlink control channel ePDCCH.

Optionally, the information acquiring unit 603 acquires control information from the control region of the first subframe by at least one of:

acquiring, by the information acquiring unit 603, an ePDCCH from an enhanced common search space eCSS or an enhanced user equipment specific search space eUESS of the control region, in the case that the control information includes the ePDCCH;

acquiring, from the control region by the information acquiring unit 603, at least two PHICHes, in the case that the control information includes PHICHes, where each PHICH is for indicating whether the UE transmits a PUSCH in a k-th subframe after a subframe carrying the PHICH, where the at least two PHICHes correspond to different values of k, and k is a positive integer;

acquiring a PCFICH by the information acquiring unit 603 from the control region, in the case that the control information includes the PCFICH, where the PCFICH is adapted to identify the number of OFDM symbols occupied by the control region.

Optionally, the subframe determining unit 602 is adapted to determine the first subframe by at least one of the following.

The subframe determining unit 602 is adapted to determine a subframe including a system information block type 1, as the first subframe.

The subframe determining unit 602 is adapted to determine a subframe including a system information block type x, as the first subframe, where x is a natural number larger than 1.

The subframe determining unit 602 is adapted to determine a multimedia broadcast multicast service over a single frequency network MBSFN subframe, as the first subframe.

The subframe determining unit 602 is adapted to determine a subframe carrying a channel state information reference signal CSI-RS, as the first subframe.

The subframe determining unit 602 is adapted to determine a special subframe in subframe configurations 0 and 5 for time division duplexing TDD, as the first subframe.

The subframe determining unit 602 is adapted to determine a subframe carrying a physical multicast channel as the first subframe.

The subframe determining unit 602 is adapted to determine a subframe carrying a random access response grant as the first subframe.

The subframe determining unit 602 is adapted to determine the second subframe, and to determine a downlink subframe in a radio frame other than the second subframe as the first subframe.

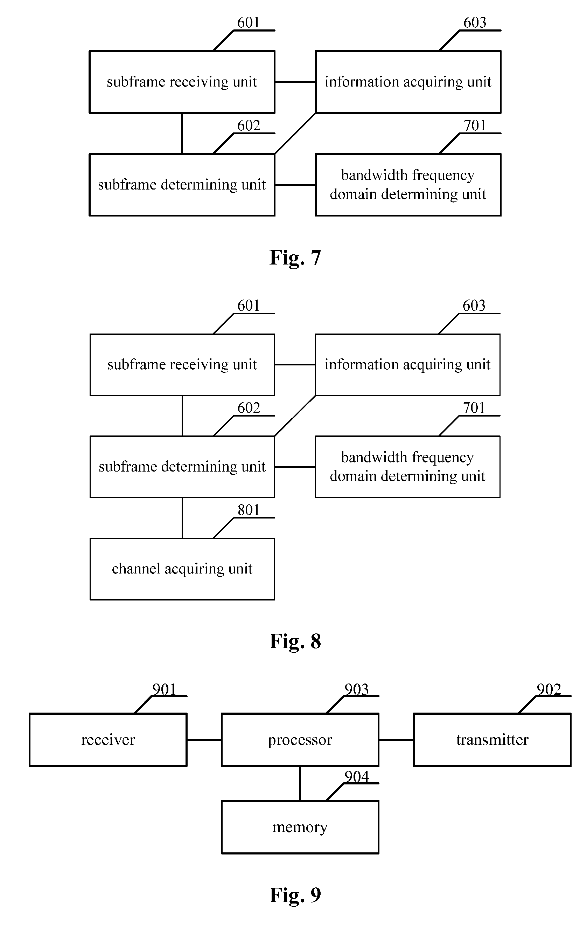

Optionally, as shown in Fig. 7, the user equipment further includes:

a bandwidth frequency domain determining unit 701, adapted to determine, according to predefined configuration information, a bandwidth and/or a frequency domain position occupied by the control region, or to determine, according to a correspondence relationship between a cell identity of a cell corresponding to the user equipment and a resource occupied by the control region, a bandwidth and/or a frequency domain position occupied by the control region, after the subframe determining unit 602 determines the first subframe.

Optionally, the subframe determining unit 602 determines the first subframe by at least one of the following.

The subframe determining unit 602 is adapted to acquire first configuration information from a system information block type 1, and to determine the first subframe based on the first configuration information, where the first configuration information includes: first time domain configuration information, and/or first frequency domain configuration information, where the first time domain configuration information is for indicating a time domain position of the first subframe, and the first frequency domain configuration information is for indicating a bandwidth and/or a frequency domain position occupied by the control region of the first subframe.

The subframe determining unit 602 is adapted to acquire second configuration information from a system information block type x, and to determine the first subframe based on the second configuration information, where x is a natural number larger than 1, and the second configuration information includes: second time domain configuration information, and/or second frequency domain configuration information. The second time domain configuration information is for indicating a time domain position of the first subframe, and the second frequency domain configuration information is for indicating a bandwidth and/or a frequency domain position occupied by the control region of the first subframe.

The subframe determining unit 602 is adapted to acquire third configuration information from a dedicated signaling of a radio resource control RRC, and to determine the first subframe based on the third configuration information, where the third configuration information includes: third time domain configuration information,

and/or third frequency domain configuration information, where the third time domain configuration information is for indicating a time domain position of the first subframe, and the third frequency domain configuration information is for indicating a bandwidth and/or a frequency domain position occupied by the control region of the first subframe.

The subframe determining unit 602 is adapted to acquire fourth configuration information from a system information block type 1, determine the second subframe based on the fourth configuration information, and determine a downlink subframe in a radio frame except for the second subframe as the first subframe, where the fourth configuration information includes fourth time domain configuration information adapted to indicate a time domain position of the second subframe.

The subframe determining unit 602 is adapted to acquire fifth configuration information from a system information block type x, determine the second subframe based on the fourth configuration information, and determine a downlink subframe in a radio frame except for the second subframe as the first subframe, where x is a natural number larger than 1, and the fifth configuration information includes fifth time domain configuration information adapted to indicate a time domain position of the second subframe.

The subframe determining unit 602 is adapted to acquire sixth configuration information from a dedicated signaling of a radio resource control RRC, determine the second subframe based on the sixth configuration information, and determine a downlink subframe in a radio frame except for the second subframe as the first subframe, where the sixth configuration information includes sixth time domain configuration information a dedicated signaling of to indicate a time domain position of the second subframe.

The subframe determining unit 602 is adapted to receive a high layer signaling, and to determine a control region of the first subframe based on the high layer signaling, where the high layer signaling is for indicating a bandwidth and/or a frequency domain position occupied by the control region.

The subframe determining unit 602 is adapted to determine a subframe as the first subframe, if a control format indicator CFI carried in a PCFICH in the subframe belongs to a first preset value set, and/or, the subframe determining unit 602 is adapted to determine a subframe as the second subframe, if a CFI carried in a PCFICH in the subframe is equal to a second preset value, where the second preset value does not belong to the first preset value set.

Optionally, if at least one of the first time domain configuration information, the second time domain configuration information, the third time domain configuration information, the fourth time domain configuration information, the fifth time domain configuration information and the sixth time domain configuration information includes a period and subframe offset, the subframe determining unit 602 is adapted to determine the time domain position of the first subframe based on the period and subframe offset;

or, if at least one of the first time domain configuration information, the second time domain configuration information, the third time domain configuration information, the fourth time domain configuration information, the fifth time domain configuration information and the sixth time domain configuration information includes bitmap encoding, the subframe determining unit 602 is adapted to determine the time domain position of the first subframe based on the bitmap encoding.

Optionally, as shown in Fig. 8, the subframe determining unit 602 is further adapted to determine the second subframe, after the sub frame receiving unit 601 receives the first subframe and the second subframe sent by the base station. The user equipment further includes: a channel acquiring unit 801, adapted to acquire, starting from a first OFDM symbol of the second subframe, a physical downlink shared channel PDSCH and/or an ePDCCH, or to acquire, starting from a first OFDM symbol of the second subframe, a downlink channel, where the downlink channel includes: a PDSCH and/or an ePDCCH, where a resource unit occupied by the downlink channel is different from a resource unit occupied by a PCFICH.

Optionally, the subframe receiving unit 601 is further adapted to receive a PHICH and/or PCFICH sent in the second subframe; and/or to receive a downlink channel which is mapped starting from a first OFDM symbol of the second subframe, where the downlink channel includes: a PDSCH and/or an ePDCCH, where a resource unit to which the downlink channel is mapped does not include a resource unit to which a PHICH is mapped or a resource unit to which a PCFICH is mapped.

Optionally, the subframe receiving unit 601 is adapted to receive, via a broadcast channel, a resource unit to which a PHICH is mapped, where the resource unit is configured by the base station.

Optionally, the subframe receiving unit 601 is further adapted to receive a physical control format indicator channel PCFICH which is sent in the first subframe and carrying a control format indicator CFI belonging to a first preset value set, and/or, receive a PCFICH which is sent in the second subframe by the UE and carrying a CFI belonging to the first preset value set.

Optionally, the subframe determining unit 602 is further adapted to determine that all downlink subframes as second subframes based on a received high layer signaling from the base station, where the high layer signaling is for indicating that all downlink subframes are second subframes.

A base station is further provided in an embodiment of the invention. As shown in Fig. 9, the base station includes: a receiver 901, a transmitter 902, a processor 903, and a memory 904, where, the processor 903 is adapted to, determine a first subframe and a second subframe, where the first subframe is a subframe with a control region, and the second subframe is a subframe with no control region; and instruct the transmitter 902 to send, through the control region of the first subframe, control information to a user equipment UE and to send, in the second subframe, a data signal and/or an enhanced physical downlink control channel ePDCCH to the UE.

Optionally, the processor 903 is adapted to determine the first subframe by at least one of the following.

The processor 903 is adapted to determine a subframe including a system information block type 1 as the first subframe.

The processor 903 is adapted to determine a subframe including a system information block type x as the first subframe, where x is a natural number larger than 1.

The processor 903 is adapted to determine a multimedia broadcast multicast service over a single frequency network MBSFN subframe, as the first subframe.

The processor 903 is adapted to determine a subframe carrying a channel state information reference signal CSI-RS as the first subframe.

The processor 903 is adapted to determine a special subframe in subframe configurations 0 and 5 for time division duplexing TDD, as the first subframe.

The processor 903 is adapted to determine a subframe carrying a physical multicast channel as the first subframe.

The processor 903 is adapted to determine a subframe carrying a random access response grant as the first subframe.

The processor 903 is adapted to determine the second subframe, and to determine a downlink subframe of a radio frame other than the second subframe as the first subframe.

Optionally, after the processor 903 determines the first subframe and the second subframe, the processor 903 is further adapted to:

determine, according to predefined configuration information, a bandwidth and/or a frequency domain position occupied by the control region, or, to determine, according to a correspondence relationship between a cell identity of a cell corresponding to the base station and a resource occupied by the control region, a bandwidth and/or a frequency domain position occupied by the control region.

Optionally, after the processor 903 determines the first subframe and the second subframe, the processor 903 is further adapted to perform one of the following:

the processor 903 is further adapted to send, through a system information block type 1, first configuration information to the UE, where the first configuration information includes first time domain configuration information and/or first frequency domain configuration information, where the first time domain configuration information is for indicating a time domain position of the first subframe, and the first frequency domain configuration information is for indicating a bandwidth and/or a frequency domain position occupied by the control region of the first subframe;

the processor 903 is further adapted to send, through a system information block type x, second configuration information to the UE, where x is a natural number larger than 1, and the second configuration information includes second time domain configuration information, and/or second frequency domain configuration information, where the second time domain configuration information is for indicating a time domain position of the first subframe, and the second frequency domain configuration information is for indicating a bandwidth and/or a frequency domain position occupied by the control region of the first subframe;

the processor 903 is further adapted to send, through a dedicated signaling of a radio resource control RRC, third configuration information to the UE, where the third configuration information includes third time domain configuration information, and/or third frequency domain configuration information, where the third time domain configuration information is for indicating a time domain position of the first subframe, and the third frequency domain configuration information is for indicating a bandwidth and/or a frequency domain position occupied by the control region of the first subframe;

the processor 903 is further adapted to send, through a system information block type 1, fourth configuration information to the UE, where the fourth configuration information includes fourth time domain configuration information adapted to indicate a time domain position of the second subframe;

the processor 903 is further adapted to send, through a system information block type x, fifth configuration information to the UE, where x is a natural number larger than 1, and the fifth configuration information includes fifth time domain configuration information adapted to indicate a time domain position of the second subframe;

the processor 903 is further adapted to send, through a dedicated signaling of a radio resource control RRC, sixth configuration information to the UE, where the sixth configuration information includes sixth time domain configuration information adapted to indicate a time domain position of the second subframe;

the processor 903 is further adapted to send a high layer signaling to the UE, where the high layer signaling is for indicating a bandwidth and/or a frequency domain position occupied by the control region;

the processor 903 is further adapted to instruct the transmitter to send a physical control format indicator channel PCFICH in the first subframe to the UE, where the PCFICH carries a control format indicator CFI belonging to a first preset value set, and/or, to instruct the base station to send a PCFICH in the second subframe to the UE, where the PCFICH carries a CFI which is equal to a second preset value, and the second preset value does not belong to the first preset value set.

Optionally, at least one of the first time domain configuration information, the second time domain configuration information, the third time domain configuration information, the fourth time domain configuration information, the fifth time domain configuration information and the sixth time domain configuration information, sent by the transmitter instructed by the processor 903, includes: a period and a subframe offset, or includes bitmap encoding.

Optionally, the control region includes: all resource elements REs of first n orthogonal frequency division multiplexing OFDM symbols of the first subframe, except for a reference signal RS, where n is an integer ranged from 1 to 4; or a part of REs of first n orthogonal frequency division multiplexing OFDM symbols of the first subframe, except for an RS, where n is an integer ranged from 1 to 4.

Optionally, the processor 903 is adapted to determine a first subframe and a second subframe by at least one of the following:

determining a first subframe and a second subframe for each of at least two cells, or, determining a first subframe and a second subframe for each of at least two carriers;

determining a first subframe and a second subframe of a reference cell, determining that a first cell corresponds to the reference cell, determining a first subframe of the first cell as the first subframe of the reference cell, and determining a second subframe of the first cell as the second subframe of the reference cell, where the reference cell is a reference physical cell or a reference component carrier;

determining a first subframe and a second subframe of a reference cell, determining that a carrier corresponds to the reference cell, determining a first subframe of the first carrier as the first subframe of the reference cell, and determining a second subframe of the first carrier as the second subframe of the reference cell, where the reference cell is a reference physical cell or a reference component carrier.

Optionally, the processor 903 is further adapted to perform at least one of the following:

the processor 903 is further adapted to, after determining a first subframe and a second subframe for each of at least two cells, notify the UE of subframe configuration information of each of the at least two cells, where the subframe configuration information of each cell includes: configuration information of the first subframe of the cell and/or configuration information of the second subframe of the cell;

the processor 903 is further adapted to, after determining a first subframe and a second subframe for each of at least two carriers, notify the UE of subframe configuration information of each of the at least two carriers, where the subframe configuration information of each carrier includes: configuration information of the first subframe of the carrier and/or configuration information of the second subframe of the carrier;

the processor 903 is further adapted to, after determining a reference cell of a first cell, notify the UE of a cell number or a carrier number of the reference cell of the first cell;

the processor 903 is further adapted to, after determining a reference cell or a reference carrier of the first carrier, notify the UE of a cell number or a carrier number of the reference cell of the first carrier.

Optionally, the control information of the first subframe determined by the processor 903 includes at least one of: a physical control format indicator channel PCFICH, a physical downlink control channel PDCCH, a physical hybrid automatic repeat request indicator channel PHICH, and an enhanced physical downlink control channel ePDCCH.

Optionally, the processor 903 is adapted to instruct the transmitter 902 to send, through the control region, control information to the UE, by at least one of the following:

the processor 903 instructs the transmitter 902 to send an ePDCCH to the UE through an enhanced common search space eCSS or an enhanced user equipment specific search space eUESS of the control region, in the case that the control information includes the ePDCCH;

the processor 903 instructs the transmitter 902 to send, through the control region, at least two PHICHes to the UE, in the case that the control information includes PHICH es, where each PHICH is for indicating whether the UE transmits a PUSCH in a k-th subframe after a subframe carrying the PHICH, the at least two PHICHes correspond to different values of k, and k is a positive integer;

the processor 903 instructs the transmitter 902 to send a PCFICH to the UE through the control region, in the case that the control information includes the PCFICH, where the PCFICH is adapted to identify the number of OFDM symbols occupied by the control region.

Optionally, after the processor 903 determines the first subframe and the second subframe, the processor 903 is further adapted to map, starting from a first OFDM symbol of the second subframe, a physical downlink shared channel PDSCH and/or an ePDCCH; or to map, starting from a first OFDM symbol of the second subframe, a downlink channel, where the down link channels include a PDSCH and/or an ePDCCH, and a resource unit to which the downlink channel is mapped is different from a resource unit to which a PCFICH is mapped.

Optionally, after determining the first subframe and the second subframe, the processor 903 is further adapted to instruct the transmitter 902 to send a PHICH and/or PCFICH in the second subframe; and/or to instruct the transmitter 902 to map, starting from a first OFDM symbol of the second subframe, a downlink channel, where the down link channel includes a PDSCH and/or an ePDCCH, and a resource unit to which the downlink channel is mapped does not include a resource unit to which a PHICH is mapped or a resource unit to which a PCFICH is mapped.

Optionally, the resource unit to which the PHICH is mapped by the instructed transmitter 902 includes: a resource unit which is configured to the UE via a broadcast channel by the instructed transmitter 902 as a resource unit to which the PHICH is mapped.

Optionally, after determining the first subframe and the second subframe, the processor 903 is further adapted to instruct the transmitter 902 to send, in the first subframe, a physical control format indicator channel PCFICH carrying a control format indicator CFI belonging to a first preset value set, and/or, to send, in the second subframe, a PCFICH carrying a CFI belonging to the first preset value set.

Optionally, a method for determining the first subframe and the second subframe by the processor 903 includes: determining, by the processor 903, all downlink subframes as second subframes; and notifying the UE, via a high layer signaling, that all downlink subframes are second subframes.

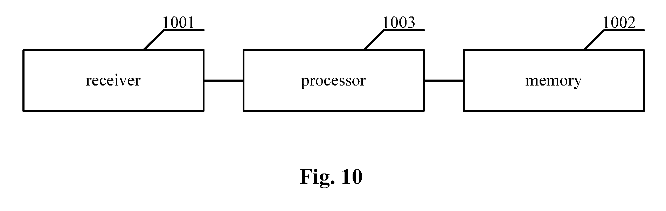

A user equipment is provided in an embodiment of the invention as shown in Fig. 10, including: a receiver 1001, a processor 1003, and a memory 1002, where the processor 1003 is adapted to, receive, via the receiver 1001, a first subframe and a second subframe sent by a base station, where the first subframe is a subframe with a control region, and the second subframe is a subframe with no control region; determine the first subframe and the second subframe; acquire control information from the control region of the first subframe determined by the subframe determining unit; and acquire a data signal and/or an enhanced physical downlink control channel ePDCCH from the second subframe.

Optionally, the control region of the first subframe includes: all resource elements REs of first n orthogonal frequency division multiplexing OFDM symbols of the first subframe, except for a reference signal RS, where n is an integer ranged from 1 to 4; or a part of REs of first n orthogonal frequency division multiplexing OFDM symbols of the first subframe, except foran RS, where n is an integer ranged from 1 to 4.

Optionally, the processor 1003 is adapted to determine the first subframe by at least one of the following:

receiving, by the processor 1003 via the receiver 1001, subframe configuration information of each of at least two cells sent by the base station, where the subframe configuration information of each cell includes: configuration information of the first subframe of the cell and/or configuration information of the second subframe of the cell, and determining the first subframe based on the subframe configuration information;

receiving, by the processor 1003 via the receiver 1001, subframe configuration information of each of at least two carriers sent by the base station, where the subframe configuration information of each carrier includes: configuration information of the first subframe of the carrier and/or configuration information of the second subframe of the carrier, and determining the first subframe based on the subframe configuration information;

receiving, by the processor 1003 via the receiver 1001, a cell number or a carrier number of a reference cell of a first cell sent by the base station, and determining a subframe of the reference cell as a first subframe of the first cell;

receiving, by the processor 1003 via the receiver 1001, a cell number or a carrier number of a reference cell of a first carrier sent by the base station, and determining a subframe of the reference cell as a first subframe of the first carrier.

Optionally, the control information includes at least one of: a physical control format indicator channel PCFICH, a physical downlink control channel PDCCH, a physical hybrid automatic repeat request indicator channel PHICH, and an enhanced physical downlink control channel ePDCCH.

Optionally, the processor 1003 acquires control information from the control region of the first subframe by at least one of the following:

acquiring, by the processor 1003, an ePDCCH from an enhanced common search space eCSS or an enhanced user equipment specific search space eUESS of the control region, in the case that the control information includes the ePDCCH;

acquiring, through the control region by the processor 1003, at least two PHICHes, in the case that the control information includes PHICHes, where each PHICH is for indicating whether the UE transmits a PUSCH in a k-th subframe after a subframe carrying the PHICH, the at least two PHICHes correspond to different values of k, and k is a positive integer;

acquiring, through the control region, a PCFICH by the processor 1003, in the case that the control information includes the PCFICH, where the PCFICH is adapted to identify the number of OFDM symbols occupied by the control region.

Optionally, the processor 1003 is adapted to determine the first subframe by at least one of the following:

the processor 1003 is adapted to determine a subframe including a system information block type 1 as the first subframe;

the processor 1003 is adapted to determine a subframe including a system information block type x as the first subframe, where x is a natural number larger than 1;

the processor 1003 is adapted to determine a multimedia broadcast multicast service over a single frequency network MBSFN subframe as the first subframe;

the processor 1003 is adapted to determine a subframe carrying a channel state information reference signal CSI-RS as the first subframe;

the processor 1003 is adapted to determine a special subframe in subframe configurations 0 and 5 for time division duplexing TDD, as the first subframe;

the processor 1003 is adapted to determine a subframe carrying a physical multicast channel as the first subframe;

the processor 1003 is adapted to determine a subframe carrying a random access response grant as the first subframe;

the processor 1003 is adapted to determine the second subframe, and to determine a downlink subframe in a radio frame other than the second subframe as the first subframe.

Optionally, after determining the first subframe, the processor 1003 is further adapted to determine, according to predefined configuration information, a bandwidth and/or a frequency domain position occupied by the control region, or to determine, according to a correspondence relationship between a cell identity of a cell corresponding to the user equipment and a resource occupied by the control region, a bandwidth and/or a frequency domain position occupied by the control region.

Optionally, the processor 1003 is adapted to determine the first subframe by at least one of the following:

the processor 1003 is adapted to acquire first configuration information from a system information block type 1, and to determine the first subframe based on the first configuration information, where the first configuration information includes: first time domain configuration information, and/or first frequency domain configuration information, where the first time domain configuration information is for indicating a time domain position of the first subframe, and the first frequency domain configuration information is for indicating a bandwidth and/or a frequency domain position occupied by the control region of the first subframe;

the processor 1003 is adapted to acquire second configuration information from a system information block type x, and to determine the first subframe based on the second configuration information, where x is a natural number larger than 1, and the second configuration information includes: second time domain configuration information, and/or second frequency domain configuration information, where the second time domain configuration information is for indicating a time domain position of the first subframe, and the second frequency domain configuration information is for indicating a bandwidth and/or a frequency domain position occupied by the control region of the first subframe;

the processor 1003 is adapted to acquire third configuration information from a dedicated signaling of a radio resource control RRC, and to determine the first subframe based on the third configuration information by the UE, where the third configuration information includes: third time domain configuration information, and/or third frequency domain configuration information, where the third time domain configuration information is for indicating a time domain position of the first subframe, and the third frequency domain configuration information is for indicating a bandwidth and/or a frequency domain position occupied by the control region of the first subframe;

the processor 1003 is adapted to acquire fourth configuration information from a system information block type 1, determine the second subframe based on the fourth configuration information, and determine a downlink subframe in a radio frame except for the second subframe as the first subframe, where the fourth configuration information includes fourth time domain configuration information adapted to indicate a time domain position of the second subframe;

the processor 1003 is adapted to acquire fifth configuration information from a system information block type x, determine the second subframe based on the fifth configuration information, and determine a downlink subframe in a radio frame except for the second subframe as the first subframe, where x is a natural number larger than 1, and the fifth configuration information includes fifth time domain configuration information adapted to indicate a time domain position of the second subframe;

the processor 1003 is adapted to acquire sixth configuration information from a dedicated signaling of a radio resource control RRC, determine the second subframe based on the sixth configuration information, and determine a downlink subframe in a radio frame except for the second subframe as the first subframe, where the sixth configuration information includes sixth time domain configuration information specific signaling to indicate a time domain position of the second subframe;

the processor 1003 is adapted to receive a high layer signaling via the receiver 1001, and to determine a control region of the first subframe based on the high layer signaling, where the high layer signaling is for indicating a bandwidth and/or a frequency domain position occupied by the control region;

the processor 1003 is adapted to determine that a subframe is the first subframe, if a control format indicator CFI carried in a PCFICH in the subframe belongs to a first preset value set, and/or, the processor 1003 is adapted to determine that a subframe is the second subframe, if a CFI carried in a PCFICH in the subframe is equal to a second preset value, where the second preset value does not belong to the first preset value set.

Optionally, if at least one of the first time domain configuration information, the second time domain configuration information, the third time domain configuration information, the fourth time domain configuration information, the fifth time domain configuration information and the sixth time domain configuration information includes a period and subframe offset, the processor 1003 is further adapted to determine the time domain position of the first subframe based on the period and subframe offset;
or, if at least one of the first time domain configuration information, the second time domain configuration information, the third time domain configuration information, the fourth time domain configuration information, the fifth time domain configuration information and the sixth time domain configuration information includes bitmap encoding, the processor 1003 is further adapted to determine the time domain position of the first subframe based on the bitmap encoding.

Optionally, the processor 1003 is further adapted to determine the second subframe, after receiving, via the receiver 1001, the first subframe and the second subframe sent by the base station; and to acquire, starting from a first OFDM symbol of the second subframe, a physical downlink shared channel PDSCH and/or an ePDCCH, or to acquire, starting from a first OFDM symbol of the second subframe, a downlink channel, where the downlink channel includes: a PDSCH and/or an ePDCCH, and a resource unit occupied by the downlink channel is different from a resource unit occupied by a PCFICH.

Optionally, after determining the first subframe and the second subframe, the processor 1003 is further adapted to receive, via the receiver 1001, a PHICH and/or PCFICH sent in the second subframe; and/or

to receive, via the receiver 1001, a downlink channel which is mapped starting from a first OFDM symbol of the second subframe, where the downlink channel includes: a PDSCH and/or an ePDCCH, where a resource unit to which the downlink channel is mapped does not include a resource unit to which a PHICH is mapped or a resource unit to which a PCFICH is mapped.

Optionally, the resource unit to which a PCFICH is mapped includes: a resource unit to which a PCFICH is mapped, which is configured by the base station and is received via a broadcast channel.

Optionally, after the first subframe and the second subframe are determined, the receiver 1001 is further adapted to receive a physical control format indicator channel PCFICH sent in the first subframe, which carries a control format indicator CFI belonging to a first preset value set, and/or, to receive a PCFICH sent in the second subframe, which carries a CFI belonging to the first preset value set.

Optionally, the processor 1003 is adapted to determine that all downlink subframes are second subframes based on a high layer signaling sent from a base station and received via the receiver 1001, where the high layer signaling is for indicating that all downlink subframes are second subframes.

It should be noted that the base station and the user equipment are merely separated by functional logic but are not limited to the disclosed separations, as long as corresponding functions can be achieved. In addition, names of the functional units are merely for convenience of distinguishing the functional units, rather than to limit the scope of the invention.

It can be understood by those skilled in the art that all of or a part of steps in the above method embodiments may be accomplished with related hardware instructed by programs. Corresponding programs may be stored in a computer readable storage medium, where the storage medium may be a read only memory, a magnetic disk or a compact disk, etc.

The above are merely particular embodiments of the invention. However, a protective scope of the invention is not limited to the particular embodiments. Any modification or substitution within the technical scope disclosed in the invention and obvious to those skilled in the art falls within the protective scope of the invention. Therefore, the protective scope of the invention shall be in accordance with that claimed in the claims.

## Claims

1. A method for sending control information, comprising:

    determining, by a base station, a first subframe and a second subframe, wherein the first subframe is a subframe with a control region, and the second subframe is a subframe with no control region; and
    sending, by the base station, control information to a user equipment UE through the control region of the first subframe, and sending, in the second subframe, a data signal and/or an enhanced physical downlink control channel ePDCCH to the UE.

2. The method according to claim 1, wherein the determining, by a base station, a first subframe comprises at least one of:

    determining, by the base station, a subframe comprising a system information block type 1 as the first subframe;
    determining, by the base station, a subframe comprising a system information block type x as the first subframe, wherein x is a natural number larger than 1;
    determining, by the base station, a multimedia broadcast multicast service over a single frequency network MBSFN subframe as the first subframe;
    determining, by the base station, a subframe carrying a channel state information reference signal CSI-RS as the first subframe;
    determining, by the base station, a special subframe in subframe configurations 0 and 5 for time division duplexing TDD as the first subframe;
    determining, by the base station, a subframe carrying a physical multicast channel as the first subframe;
    determining, by the base station, a subframe carrying a random access response grant as the first subframe; and

determining, by the base station, the second subframe, and determining a downlink subframe in a radio frame other than the second subframe as the first subframe.

3. The method according to claim 1 or 2, after determining, by the base station, a first subframe and a second subframe, the method further comprises:

determining, by the base station, a bandwidth and/or a frequency domain position occupied by the control region, according to predefined configuration information; or

determining, by the base station, a bandwidth and/or a frequency domain position occupied by the control region, according to a correspondence relationship between a cell identity of a cell corresponding to the base station and a resource occupied by the control region.

4. The method according to any one of claims 1-3, after determining, by the base station, a first subframe and a second subframe, the method further comprises at least one of:

Sending, by the base station, first configuration information to the UE through a system information block type 1, wherein the first configuration information comprises: first time domain configuration information, and/or first frequency domain configuration information, wherein the first time domain configuration information is for indicating a time domain position of the first subframe, and the first frequency domain configuration information is for indicating a bandwidth and/or a frequency domain position occupied by the control region of the first subframe;

sending, by the base station, second configuration information to the UE through a system information block type x , wherein x is a natural number larger than 1, and the second configuration information comprises: second time domain configuration information, and/or second frequency domain configuration information, wherein the second time domain configuration information is for indicating a time domain position of the first subframe, and the second frequency domain configuration information is for indicating a bandwidth and/or a frequency domain position occupied by the control region of the first subframe;

sending, by the base station, third configuration information to the UE through a dedicated signaling of a radio resource control RRC, wherein the third configuration information comprises: third time domain configuration information,

and/or third frequency domain configuration information, wherein the third time domain configuration information is for indicating a time domain position of the first subframe, and the third frequency domain configuration information is for indicating a bandwidth and/or a frequency domain position occupied by the control region of the first subframe;

sending, by the base station, fourth configuration information to the UE through a system information block type 1, wherein the fourth configuration information comprises fourth time domain configuration information adapted to indicate a time domain position of the second subframe;

sending, by the base station, fifth configuration information to the UE through a system information block type x, wherein x is a natural number larger than 1, and the fifth configuration information comprises fifth time domain configuration information adapted to indicate a time domain position of the second subframe;

sending, by the base station, sixth configuration information to the UE through a dedicated signaling of a radio resource control RRC, wherein the sixth configuration information comprises sixth time domain configuration information adapted to indicate a time domain position of the second subframe;

sending, by the base station, a high layer signaling to the UE, wherein the high layer signaling is for indicating a bandwidth and/or a frequency domain position occupied by the control region.

5. The method according to claim 4, wherein at least one of the first time domain configuration information, the second time domain configuration information, the third time domain configuration information, the fourth time domain configuration information, the fifth time domain configuration information and the sixth time domain configuration information comprises a period and a subframe offset, or comprises bitmap encoding.

6. The method according to any one of claims 1-5, wherein the control region comprises:

all resource elements REs of first n orthogonal frequency division multiplexing OFDM symbols of the first subframe, except for a reference signal RS, wherein n is an integer ranged from 1 to 4; or

a part of REs of first n OFDM symbols of the first subframe, except for an RS, wherein n is an integer ranged from 1 to 4.

7. The method according to any one of claims 1-6, wherein the determining, by a base station, a first subframe and a second subframe, comprises at least one of:

determining, by the base station, a first subframe and a second subframe for each of at least two cells, or determining, by the base station, a first subframe and a second subframe for each of at least two carriers;

determining, by the base station, a first subframe and a second subframe of a reference cell, determining that a first cell corresponds to the reference cell, determining a first subframe of the first cell as the first subframe of the reference cell, and determining a second subframe of the first cell as the second subframe of the reference cell, wherein the reference cell is a reference physical cell or a reference component carrier;

determining, by the base station, a first subframe and a second subframe of a reference cell, determining that a first carrier corresponds to the reference cell, determining a first subframe of the first carrier as the first subframe of the reference cell, and determining a second subframe of the first carrier as the second subframe of the reference cell, wherein the reference cell is a reference physical cell or a reference component carrier.

8. The method according to claim 7, further comprising at least one of:

after the determining, by the base station, a first subframe and a second subframe for each of at least two cells, notifying, by the base station, the UE of subframe configuration information of each of the at least two cells, wherein the subframe configuration information of each cell comprises: configuration information of the first subframe of the cell and/or configuration information of the second subframe of the cell;

after the determining, by the base station, a first subframe and a second subframe for each of at least two carriers, notifying, by the base station, the UE of subframe configuration information of each of the at least two carriers, wherein the subframe configuration information of each carrier comprises: configuration information of the first subframe of the carrier and/or configuration information of the second subframe of the carrier;

after the determining, by the base station, a reference cell of a first cell, notifying, by the base station, the UE of a cell number or a carrier number of the reference cell of the first cell; and

after determining, by the base station, a reference cell or a reference carrier of the first carrier, notifying, by the base station, the UE of a cell number or a carrier number of the reference cell of the first carrier.

9. The method according to any one of claims 1-8, wherein the control information comprises:

at least one of: a physical control format indicator channel PCFICH, a physical downlink control channel PDCCH, a physical hybrid automatic repeat request indicator channel PHICH, and an enhanced physical downlink control channel ePDCCH.

10. The method according to claim 9, wherein the sending, by the base station, control information to the UE through the control region, comprises at least one of:

sending, by the base station, an ePDCCH to the UE in an enhanced common search space eCSS or an enhanced user equipment-specific search space eUESS of the control region, in the case that the control information comprises the ePDCCH;

sending, by the base station, at least two PHICHes to the UE through the control region, in the case that the control information comprises the PHICHes, wherein each PHICH is for indicating whether the UE transmits a PUSCH in a k-th subframe after a subframe carrying the PHICH, wherein the at least two PHICHes correspond to different values of k, and k is a positive integer; and

sending, by the base station, a PCFICH to the UE through the control region, in the case that the control information comprises the PCFICH, wherein the PCFICH is adapted to identify the number of OFDM symbols occupied by the control region.

11. The method according to any one of claims 1-10, after determining, by the base station, a first subframe and a second subframe, the method further comprises at least one of:

mapping, starting from a first OFDM symbol of the second subframe, a physical downlink shared channel PDSCH and/or an ePDCCH, by the base station;

mapping, starting from a first OFDM symbol of the second subframe, a downlink channel by the base station, wherein the down link channel comprises a PDSCH and/or an ePDCCH, wherein a resource unit to which the downlink channel is mapped is different from a resource unit to which a PCFICH is mapped; and

sending a PHICH and/or a PCFICH in the second subframe by the base station; mapping, starting from a first OFDM symbol of the second subframe, a downlink channel by the base station, wherein the down link channel comprises a PDSCH and/or an ePDCCH, wherein a resource unit to which the downlink channel is mapped does not comprise a resource unit to which the PHICH is mapped or a resource unit to which the PCFICH is mapped.

12. The method according to claim 11, where the resource unit to which the PHICH is mapped comprises:

a resource unit to which the PHICH is mapped, which is configured by the base station to the UE via a broadcast channel.

13. The method according to any one of claims 1-12, after determining, by a base station, a first sub frame and a second subframe, the method further comprises:

sending, by the base station in the first subframe, a physical control format indicator channel PCFICH carrying a control format indicator CFI belonging to a first preset value set, and/or sending, by the base station in the second subframe, a PCFICH carrying a CFI belonging to the first preset value set.

14. The method according to any one of claims 1-13, wherein the determining, by a base station, a second subframe comprises:

determining, by the base station, all downlink subframes as the second subframe; or determining, by the base station, all downlink subframes as the second subframe, and notifying the UE, via a high layer signaling, that all downlink subframes are the second subframe.

15. The method according to any one of claims 1-3, after determining, by a base station, a first subframe and a second subframe, the method further comprises:

sending, by the base station in the first subframe to the UE, a physical control format indicator channel PCFICH carrying a control format indicator CFI belonging to a first preset value set, and/or sending, by the base station in the second subframe to the UE, a PCFICH carrying a CFI which is equal to a second preset value, wherein the second preset value does not belong to the first preset value set.

16. A method for sending control information, comprising:

receiving, by a user equipment UE, a first subframe and a second subframe sent by a base station, wherein the first subframe is a subframe with a control region, and the second subframe is a subframe with no control region; determining, by the UE, the first subframe and the second subframe; and acquiring, by the UE, control information from the control region of the first subframe, and acquiring a data signal and/or an enhanced physical downlink control channel ePDCCH from the second subframe.

17. The method according to claim 16, wherein the control region comprises:

all resource elements REs of first n orthogonal frequency division multiplexing OFDM symbols of the first subframe, except for a reference signal RS, wherein n is an integer ranged from 1 to 4; or a part of REs of first n OFDM symbols of the first subframe, except for an RS, wherein n is an integer ranged from 1 to 4.

18. The method according to claim 16 or claim 17, wherein the determining, by the UE, the first subframe comprises at least one of:

receiving, by the UE, subframe configuration information of each of at least two cells sent by the base station, wherein the subframe configuration information of each cell comprises: configuration information of the first subframe of the cell and/or configuration information of the second subframe of the cell; and determining the first subframe based on the subframe configuration information; receiving, by the UE, subframe configuration information of each of at least two carriers sent by the base station, wherein the subframe configuration information of each carrier comprises: configuration information of the first subframe of the carrier and/or configuration information of the second subframe of the carrier; and determining the first subframe based on the subframe configuration information; receiving, by the UE, a cell number or a carrier number of a reference cell of a first cell sent by the base station, and determining a subframe of the reference cell as a first subframe of the first cell; and receiving, by the UE, a cell number or a carrier number of a reference cell of a first carrier sent by the base station, and determining a subframe of the reference cell as a first subframe of the first carrier.

19. The method according to any one of claims 15-17, wherein the control information comprises:

at least one of: a physical control format indicator channel PCFICH, a physical downlink control channel PDCCH, a physical hybrid automatic repeat request indicator channel PHICH, and an enhanced physical downlink control channel ePDCCH.

20. The method according to claim 19, wherein the acquiring, by the UE, control information from the control region of the first subframe, comprises at least one of:

acquiring, by the UE, an ePDCCH from an enhanced common search space eCSS or an enhanced user equipment specific search space eUESS of the control region, in the case that the control information comprises the ePDCCH; acquiring, by the UE, at least two PHICHes from the control region, in the case that the control information comprises the PHICHes, wherein each PHICH is for indicating whether the UE transmits a PUSCH in a k-th subframe after a subframe carrying the PHICH, wherein the at least two PHICHes correspond to different values of k and k is a positive integer; and acquiring, by the UE, a PCFICH from the control region, in the case that the control information comprises the PCFICH, wherein the PCFICH is adapted to identify the number of OFDM symbols occupied by the control region.

21. The method according to any one of claims 16-20, wherein the determining, by the UE, the first subframe comprises at least one of:

determining, by the UE, a subframe comprising a system information block type 1 as the first subframe; determining, by the UE, a subframe comprising a system information block type x as the first subframe, wherein x is a natural number larger than 1; determining, by the UE, a multimedia broadcast multicast service over a single frequency network MBSFN subframe as the first subframe; determining, by the UE, a subframe carrying a channel state information reference signal CSI-RS as the first subframe; determining, by the UE, a special subframe in subframe configurations 0 and 5 for time division duplexing TDD as the first subframe; determining, by the UE, a subframe carrying a physical multicast channel as the first subframe; determining, by the UE, a subframe carrying a random access response grant as the first subframe;

determining, by the UE, the second subframe, and determining a downlink subframe in a radio frame other than the second subframe as the first subframe.

22. The method according to any one of claims 16-21, after determining, by the UE, the first subframe, the method further comprises:

determining, by the UE, a bandwidth and/or a frequency domain position occupied by the control region, according to predefined configuration information; or determining, by the UE, a bandwidth and/or a frequency domain position occupied by the control region, according to a correspondence relationship between a cell identity of a cell corresponding to the UE and a resource occupied by the control region.

23. The method according to any one of claims 16-22, wherein the determining, by the UE, the first subframe comprises at least one of:

acquiring, by the UE, first configuration information from a system information block type 1, and determining the first subframe based on the first configuration information, wherein the first configuration information comprises: first time domain configuration information, and/or first frequency domain configuration information, wherein the first time domain configuration information is for indicating a time domain position of the first subframe, and the first frequency domain configuration information is for indicating a bandwidth and/or a frequency domain position occupied by the control region of the first subframe; acquiring, by the UE, second configuration information from a system information block type x, and determining the first subframe based on the second configuration information, wherein x is a natural number larger than 1, and the second configuration information comprises: second time domain configuration information, and/or second frequency domain configuration information, wherein the second time domain configuration information is for indicating a time domain position of the first subframe, and the second frequency domain configuration information is for indicating a bandwidth and/or a frequency domain position occupied by the control region of the first subframe; acquiring, by the UE, third configuration information from a dedicated signaling of a radio resource control RRC, and determining the first subframe based on the third configuration information, wherein the third configuration information comprises: third time domain configuration information, and/or third frequency domain configuration information, wherein the third time domain configuration information is for indicating a time domain position of the first subframe, and the third frequency domain configuration information is for indicating a bandwidth and/or a frequency domain position occupied by the control region of the first subframe;

acquiring, by the UE, fourth configuration information from a system information block type 1, determining the second subframe based on the fourth configuration information, and determining a downlink subframe in a radio frame other than the second subframe as the first subframe, wherein the fourth configuration information comprises fourth time domain configuration information adapted to indicate a time domain position of the second subframe;

acquiring, by the UE, fifth configuration information from a system information block type x; determining the second subframe based on the fourth configuration information; and determining a downlink subframe in a radio frame other than the second subframe as the first subframe, wherein x is a natural number larger than 1, and the fifth configuration information comprises fifth time domain configuration information adapted to indicate a time domain position of the second subframe;

acquiring, by the UE, sixth configuration information from a dedicated signaling of a radio resource control RRC, determining the second subframe based on the sixth configuration information, and determining a downlink subframe in a radio frame other than the second subframe as the first subframe, wherein the sixth configuration information comprises sixth time domain configuration information adapted to indicate a time domain position of the second subframe; and

receiving, by the UE, a high layer signaling; and determining a control region of the first subframe based on the high layer signaling, wherein the high layer signaling is for indicating a bandwidth and/or a frequency domain position occupied by the control region.

24. The method according to claim 23, wherein at least one of the first time domain configuration information, the second time domain configuration information, the third time domain configuration information, the fourth time domain configuration information, the fifth time domain configuration information and the sixth time domain configuration information comprises a period and a subframe offset, and the UE determines the time domain position of the first subframe based on the period and the subframe offset; or
at least one of the first time domain configuration information, the second time domain configuration information, the third time domain configuration information, the fourth time domain configuration information, the fifth time domain configuration information and the sixth time domain configuration information comprises bitmap encoding, and the UE determines the time domain position of the first subframe based on the bitmap encoding.

25. The method according to any one of claims 16-24, after receiving, by a UE, a first subframe and a second subframe sent by a base station, the method further comprises at least one of:

determining the second subframe by the UE; and acquiring, starting from a first OFDM symbol of the second subframe, a physical downlink shared channel PDSCH and/or an ePDCCH, by the UE;

acquiring, starting from a first OFDM symbol of the second subframe, a downlink channel by the UE, wherein the downlink channel comprises: a PDSCH and/or an ePDCCH, wherein a resource unit occupied by the downlink channel is different from a resource unit occupied by a PCFICH; and

receiving, by the UE, a PHICH and/or PCFICH sent in the second subframe, and acquiring, by the UE, a downlink channel which is mapped starting from a first OFDM symbol of the second subframe, wherein the downlink channel comprises: a PDSCH and/or an ePDCCH, wherein a resource unit to which the downlink channel is mapped does not comprise a resource unit to which the PHICH is mapped or a resource unit to which the PCFICH is mapped.

26. The method according to claim 25, wherein the resource unit to which the PHICH is mapped comprises:

a resource unit to which the PHICH is mapped, which is configured by the base station and received by the UE via a broadcast channel.

27. The method according to any one of claims 16-26, after determining, by the UE, the first subframe and the second subframe, the method further comprises:

receiving, by the UE, a physical control format indicator channel PCFICH which is sent in the first subframe and carries a control format indicator CFI belonging to a first preset value set, and/or receiving, by the UE, a PCFICH which is sent in the second subframe and carries a CFI belonging to the first preset value set.

**28.** The method according to any one of claims 16-27, wherein the determining, by the UE, the second subframe comprises:

receiving, by the UE, a high layer signaling from a base station, wherein the high layer signaling is for indicating that all downlink subframes are the second subframe.

**29.** The method according to any one of claims 16-22, wherein the determining, by the UE, the first subframe comprises at least one of:

determining, by the UE, that a subframe is the first subframe if a control format indicator CFI carried in a PCFICH in the subframe belongs to a first preset value set, and/or determining, by the UE, that a subframe is the second subframe if a CFI carried in a PCFICH in the subframe is equal to a second preset value, wherein the second preset value does not belong to the first preset value set.

**30.** A base station, comprising:

a subframe determining unit, adapted to determine a first subframe and a second subframe, wherein the first subframe is a subframe with a control region, and the second subframe is a subframe with no control region; and
a sending unit, adapted to send control information to a user equipment UE through the control region of the first subframe determined by the subframe determining unit, and to send a data signal and/or an enhanced physical downlink control channel ePDCCH to the UE in the second subframe.

**31.** The base station according to claim 30, wherein the subframe determining unit is adapted to determine the first subframe by at least one of:

determining a subframe comprising a system information block type 1 as the first subframe;
determining a subframe comprising a system information block type x as the first subframe, wherein x is a natural number larger than 1;
determining a multimedia broadcast multicast service over a single frequency network MBSFN subframe as the first subframe;
determining a subframe carrying a channel state information reference signal CSI-RS as the first subframe;
determining a special subframe in subframe configurations 0 and 5 for time division duplexing TDD as the first subframe;
determining a subframe carrying a physical multicast channel as the first subframe;

determining a subframe carrying a random access response grant as the first subframe; and
determining the second subframe, and determining a downlink subframe in the radio frame other than the second subframe as the first subframe.

**32.** The base station according to claim 30 or claim 31, further comprising:

a bandwidth position determining unit, adapted to determine a bandwidth and/or a frequency domain position occupied by the control region, according to predefined configuration information or to determine a bandwidth and/or a frequency domain position occupied by the control region, according to a correspondence relationship between a cell identity of a cell corresponding to the base station and a resource occupied by the control region, after the subframe determining unit determines the first subframe and the second subframe; and
the sending unit is adapted to send control information to the UE, by using the bandwidth and/or frequency domain position occupied by the control region, which is determined by the bandwidth position determining unit.

**33.** The base station according to any one of claims 30-32, wherein
after the subframe determining unit determines the first subframe and the second subframe, the sending unit is further adapted to perform at least one of:

sending, through a system information block type 1, first configuration information to the UE, wherein the first configuration information comprises: first time domain configuration information, and/or first frequency domain configuration information, wherein the first time domain configuration information is for indicating a time domain position of the first subframe, and the first frequency domain configuration information is for indicating a bandwidth and/or a frequency domain position occupied by the control region of the first subframe;
sending, through a system information block type x, second configuration information to the UE, wherein x is a natural number larger than 1, and the second configuration information comprises: second time domain configuration information, and/or second frequency domain configuration information, wherein the second time domain configuration information is for indicating a time domain position of the first subframe, and the second frequency domain configuration information is for indicating a bandwidth and/or a frequency domain position occupied by the control region of the first subframe; sending, through a dedicated signaling of a radio resource control RRC, third configuration information to the UE, wherein the third configuration information comprises: third time domain configuration information, and/or third frequency domain configuration information, wherein the third time domain configuration information is for indicating a time domain position of the first subframe, and the third frequency domain configuration information is for indicating a bandwidth and/or a frequency domain position occupied by the control region of the first subframe; sending, through a system information block type 1, fourth configuration information to the UE, wherein the fourth configuration information comprises fourth time domain configuration information adapted to indicate a time domain position of the second subframe; sending, through a system information block type x, fifth configuration information to the UE, wherein x is a natural number larger than 1, and the fifth configuration information comprises fifth time domain configuration information adapted to indicate a time domain position of the second subframe; sending, through a dedicated signaling of a radio resource control RRC, sixth configuration information to the UE, wherein the sixth configuration information comprises sixth time domain configuration information adapted to indicate a time domain position of the second subframe; and sending a high layer signaling to the UE, wherein the high layer signaling is for indicating a bandwidth and/or a frequency domain position occupied by the control region.

34. The device according to claim 33, wherein at least one of the first time domain configuration information, the second time domain configuration information, the third time domain configuration information, the fourth time domain configuration information, the fifth time domain configuration information and the sixth time domain configuration information, sent by the sending unit, comprises: a period and a subframe offset, or comprises bitmap encoding.

35. The base station according to any one of claims 30-34, wherein the control region used by the sending unit comprises:

all resource elements REs of first n orthogonal frequency division multiplexing OFDM symbols of the first subframe, except for a reference signal RS, wherein n is an integer ranged from 1 to 4; or

a part of REs of first n OFDM symbols of the first subframe, except for an RS, wherein n is an integer ranged from 1 to 4.

36. The base station according to any one of claims 30-35, wherein the subframe determining unit is adapted to determine a first subframe and a second subframe by at least one of:

determining, by the subframe determining unit, a first subframe and a second subframe for each of at least two cells; or determining, by the base station, a first subframe and a second subframe for each of at least two carriers; determining, by the subframe determining unit, a first subframe and a second subframe of a reference cell, determining that a first cell corresponds to the reference cell, determining a first subframe of the first cell as the first subframe of the reference cell, and determining a second subframe of the first cell as the second subframe of the reference cell, wherein the reference cell is a reference physical cell or a reference component carrier; determining, by the subframe determining unit, a first subframe and a second subframe of a reference cell, determining that a first carrier corresponds to the reference cell, determining a first subframe of the first carrier as the first subframe of the reference cell, and determining a second subframe of the first carrier as the second subframe of the reference cell, wherein the reference cell is a reference physical cell or a reference component carrier.

37. The base station according to claim 34, wherein the sending unit is further adapted to perform at least one of:

after determining, by the subframe determining unit, a first subframe and a second subframe for each of at least two cells, notifying the UE of subframe configuration information of each of the at least two cells, wherein the subframe configuration information of each cell comprises: configuration information of the first subframe of the cell and/or configuration information of the second subframe of the cell; after determining, by the subframe determining unit, a first subframe and a second subframe for at least two carriers, notifying the UE of subframe configuration information of each of the at least two carriers, wherein the subframe configuration information of each carrier comprises: configuration information of the first subframe of the carrier and/or configuration information of the second subframe of the carrier;

after determining, by the subframe determining unit, a reference cell of a first cell, notifying the UE of a cell number or a carrier number of the reference cell of the first cell;

after determining, by the subframe determining unit, a reference cell or a reference carrier of a first carrier, notifying the UE of a cell number or a carrier number of the reference cell of the first carrier.

38. The base station according to any one of claims 30-37, wherein

the control information sent by the sending unit comprises at least one item of: a physical control format indicator channel PCFICH, a physical downlink control channel PDCCH, a physical hybrid automatic repeat request indicator channel PHICH, and an enhanced physical downlink control channel ePDCCH.

39. The base station according to any one of claims 38, wherein

the sending unit is adapted to send control information to the UE through the control region by at least one of:

sending, by the sending unit, an ePDCCH to the UE in an enhanced common search space eCSS or an enhanced user equipment specific search space eUESS of the control region, in the case that the control information comprises the ePDCCH;

sending, by the sending unit, at least two PHICHes to the UE through the control region, in the case that the control information comprises the PHICHes, wherein each PHICH is for indicating whether the UE transmits a PUSCH in a k-th subframe after a subframe carrying the PHICH, wherein the at least two PHICHes correspond to different values of k, and k is a positive integer; and

sending, by the sending unit, a PCFICH to the UE through the control region, in the case that the control information comprises the PCFICH, wherein the PCFICH is adapted to identify the number of OFDM symbols occupied by the control region.

40. The base station according to any one of claims 30-39, further comprising:

a mapping unit, adapted to map, starting from a first OFDM symbol of the second subframe, a physical downlink shared channel PDSCH and/or an ePDCCH or to map, starting from a first OFDM symbol of the second subframe, a downlink channel, after the subframe determining unit determines the first subframe and the second subframe; wherein the downlink channel comprises a PDSCH and/or an ePDCCH, wherein a resource unit to which the downlink channel is mapped is different from a resource unit to which a PCFICH is mapped.

41. The base station according to any one of claims 30-40, wherein

after the subframe determining unit determines the first subframe and the second subframe, the sending unit is further adapted to send a PHICH and/or PCFICH in the second subframe, and/or to map, starting from a first OFDM symbol of the second subframe, a downlink channel, wherein the down link channel comprises a PDSCH and/or an ePDCCH, wherein a resource unit to which the downlink channel is mapped does not comprise a resource unit to which the PHICH is mapped or a resource unit to which the PCFICH is mapped.

42. The base station according to claim 41, wherein the resource unit to which the PHICH is mapped by the sending unit comprises: a resource unit which is configured to the UE via a broadcast channel as a resource unit to which the PHICH is mapped.

43. The base station according to claim 42, wherein after the first subframe and the second subframe are determined, the sending unit is further adapted to send, in the first subframe, a physical control format indicator channel PCFICH carrying a control format indicator CFI belonging to a first preset value set, and/or to send, in the second subframe, a PCFICH carrying a CFI belonging to the first preset value set.

44. The base station according to any one of claims 30-43, wherein

the subframe determining unit is adapted to determine all downlink subframes are the second subframe; or,

the sending unit is adapted to notify the UE, via a high layer signaling, that all downlink subframes are the second subframe if the subframe determining unit determines all downlink subframes as the second subframe.

45. The base station according to any one of claims 30-32, wherein

after the subframe determining unit determines the first subframe and the second subframe, the sending unit is further adapted to send, in the first subframe to the UE, a physical control format indicator channel PCFICH carrying a control format indicator CFI belonging to a first preset value set, and/or to send, in the second subframe to the UE, a PCFICH carrying a CFI equaling to a second preset value, wherein the second preset value does not belong to the first preset value set.

**46.** A user equipment, comprising:

a subframe receiving unit, adapted to receive a first subframe and a second subframe sent by a base station, wherein the first subframe is a subframe with a control region, and the second subframe is a subframe with no control region; a subframe determining unit, adapted to determine the first subframe and the second subframe received by the subframe receiving unit; and

an information acquiring unit, adapted to acquire control information from the control region of the first subframe determined by the subframe determining unit, and to acquire a data signal and/or an enhanced physical downlink control channel ePDCCH from the second subframe.

**47.** The user equipment according to claim 46, wherein the control region of the first subframe received by the subframe receiving unit comprises: all resource elements REs of first n orthogonal frequency division multiplexing OFDM symbols of the first subframe, except for a reference signal RS, wherein n is an integer ranged from 1 to 4; or a part of REs of first n OFDM symbols of the first subframe, except for an RS, wherein n is an integer ranged from 1 to 4.

**48.** The user equipment according to claim 46 or claim 47, wherein the subframe determining unit is adapted to determine the first subframe by at least one of:

receiving, by the subframe determining unit, subframe configuration information of each of at least two cells sent by the base station, wherein the subframe configuration information of each cell comprises: configuration information of the first subframe of the cell and/or configuration information of the second subframe of the cell; and determining the first subframe based on the subframe configuration information;

receiving, by the subframe determining unit, subframe configuration information of each of at least two carriers sent by the base station, wherein the subframe configuration information of each carrier comprises: configuration information of the first subframe of the carrier and/or configuration information of the second subframe of the carrier, and determining the first subframe based on the subframe configuration information;

receiving, by the subframe determining unit, a cell number or a carrier number of a reference cell of a first cell sent by the base station, and determining a subframe of the reference cell as a first subframe of the first cell;

receiving, by the subframe determining unit, a cell number or a carrier number of a reference cell of a first carrier sent by the base station, and determining a subframe of the reference cell as a first subframe of the first carrier.

**49.** The user equipment according to any one of claims 46-48, wherein the control information acquired by the information acquiring unit comprises at least one of: a physical control format indicator channel PCFICH, a physical downlink control channel PDCCH, a physical hybrid automatic repeat request indicator channel PHICH, and an enhanced physical downlink control channel ePDCCH.

**50.** The user equipment according to claim 49, wherein the information acquiring unit acquires control information from the control region of the first subframe by at least one of:

acquiring, by the information acquiring unit, an ePDCCH from an enhanced common search space eCSS or an enhanced user equipment specific search space eUESS of the control region, in the case that the control information comprises the ePDCCH;

acquiring, by the information acquiring unit, at least two PHICHes from the control region, in the case that the control information comprises the PHICHes, wherein each PHICH is for indicating whether the UE transmits a PUSCH in a k-th subframe after a subframe carrying the PHICH, wherein the at least two PHICHes correspond to different values of k, and k is a positive integer; and

acquiring, by the information acquiring unit, a PCFICH from the control region, in the case that the control information comprises the PCFICH, wherein the PCFICH is adapted to identify the number of OFDM symbols occupied by the control region.

**51.** The user equipment according to any one of claims 46-50, wherein the subframe determining unit is adapted to determine the first subframe by at least one of:

determining, by the subframe determining unit, a subframe including a system information block type 1 as the first subframe;

determining, by the subframe determining unit, a subframe including a system information block type x as the first subframe, wherein x is a natural number larger than 1;

determining, by the subframe determining unit, a multimedia broadcast multicast service over a single frequency network MBSFN subframe as the first subframe;

determining, by the subframe determining unit, a subframe carrying a channel state information reference signal CSI-RS as the first subframe; determining, by the subframe determining unit, a special subframe in subframe configurations 0 and 5 for time division duplexing TDD as the first subframe; determining, by the subframe determining unit, a subframe carrying a physical multicast channel as the first subframe; determining, by the subframe determining unit, a subframe carrying a random access response grant as the first subframe; determining, by the subframe determining unit, the second subframe; and determining a downlink subframe in a radio frame other than the second subframe as the first subframe.

52. The user equipment according to any one of claims 46-51, further comprising:

a bandwidth frequency domain determining unit, adapted to determine, according to predefined configuration information, a bandwidth and/or a frequency domain position occupied by the control region or to determine, according to a correspondence relationship between a cell identity of a cell corresponding to the user equipment and a resource occupied by the control region, a bandwidth and/or a frequency domain position occupied by the control region, after the subframe determining unit determines the first subframe.

53. The user equipment according to any one of claims 46-52, wherein
the subframe determining unit is adapted to determine the first subframe by at least one of:

acquiring, by the subframe determining unit, first configuration information from a system information block type 1, and determining the first subframe based on the first configuration information, wherein the first configuration information comprises: first time domain configuration information, and/or first frequency domain configuration information, wherein the first time domain configuration information is for indicating a time domain position of the first subframe, and the first frequency domain configuration information is for indicating a bandwidth and/or a frequency domain position occupied by the control region of the first subframe; acquiring, by the subframe determining unit, second configuration information from a system information block type x, and determining the first subframe based on the second configuration information, wherein x is a natural number larger than 1, and the second configuration information comprises: second time domain configuration information, and/or second frequency domain configuration information, wherein the second time domain configuration information is for indicating a time domain position of the first subframe, and the second frequency domain configuration information is for indicating a bandwidth and/or a frequency domain position occupied by the control region of the first subframe; acquiring, by the subframe determining unit, third configuration information from a dedicated signaling of a radio resource control RRC, and determining the first subframe based on the third configuration information, wherein the third configuration information comprises: third time domain configuration information, and/or third frequency domain configuration information, wherein the third time domain configuration information is for indicating a time domain position of the first subframe, and the third frequency domain configuration information is for indicating a bandwidth and/or a frequency domain position occupied by the control region of the first subframe; acquiring, by the subframe determining unit, fourth configuration information from a system information block type 1, determining the second subframe based on the fourth configuration information, and determining a downlink subframe in a radio frame except for the second subframe as the first subframe, wherein the fourth configuration information comprises fourth time domain configuration information adapted to indicate a time domain position of the second subframe; acquiring, by the subframe determining unit, fifth configuration information from a system information block type x, determining the second subframe based on the fourth configuration information, and determining a downlink subframe in a radio frame except for the second subframe as the first subframe, wherein x is a natural number larger than 1, and the fifth configuration information comprises fifth time domain configuration information adapted to indicate a time domain position of the second subframe; acquiring, by the subframe determining unit, sixth configuration information from a dedicated signaling of a radio resource control RRC; determining the second subframe based on the sixth configuration information, and determining a downlink subframe in a radio frame except for the second subframe as the first subframe, wherein the sixth configuration information comprises sixth time domain configuration information adapted to indicate a time domain position of the second subframe; and

receiving, by the subframe determining unit, a high layer signaling; and determining, by the subframe determining unit, a control region of the first subframe based on the high layer signaling, wherein the high layer signaling is for indicating a bandwidth and/or a frequency domain position occupied by the control region.

54. The user equipment according to claim 53, wherein
if at least one of the first time domain configuration information, the second time domain configuration information, the third time domain configuration information, the fourth time domain configuration information, the fifth time domain configuration information and the sixth time domain configuration information comprises a period and a subframe offset, the subframe determining unit is adapted to determine the time domain position of the first subframe based on the period and the subframe offset; or
if at least one of the first time domain configuration information, the second time domain configuration information, the third time domain configuration information, the fourth time domain configuration information, the fifth time domain configuration information and the sixth time domain configuration information comprises bitmap encoding, the subframe determining unit is adapted to determine the time domain position of the first subframe based on the bitmap encoding.

55. The user equipment according to any one of claims 46-54, wherein
the subframe determining unit is further adapted to determine the second subframe, after the subframe receiving unit receives the first subframe and the second subframe sent by the base station; and
the user equipment further comprises: a channel acquiring unit, adapted to acquire, starting from a first OFDM symbol of the second subframe, a physical downlink shared channel PDSCH and/or an ePDCCH, or to acquire, starting from a first OFDM symbol of the second subframe, a downlink channel, wherein the downlink channel comprises: a PDSCH and/or an ePDCCH, wherein a resource unit occupied by the downlink channel is different from a resource unit occupied by a PCFICH.

56. The user equipment according to any one of claims 46-55, wherein
the subframe receiving unit is further adapted to receive a PHICH and/or PCFICH sent in the second subframe; and/or to receive a downlink channel which is mapped starting from a first OFDM symbol of the second subframe, wherein the downlink channel comprises: a PDSCH and/or an ePDCCH, wherein a resource unit to which the downlink channel is mapped does not comprise a resource unit to which the PHICH is mapped or a resource unit to which the PCFICH is mapped.

57. The user equipment according to claim 56, wherein the subframe receiving unit is adapted to receive, via a broadcast channel, a resource unit to which the PHICH is mapped, which is configured by the base station.

58. The user equipment according to any one of claims 46-57, wherein
the subframe receiving unit is further adapted to receive a physical control format indicator channel PCFICH which is sent in the first subframe and carries a control format indicator CFI belonging to a first preset value set, and/or to receive a PCFICH which is sent in the second subframe and carries a CFI belonging to the first preset value set, after the first subframe and the second subframe are determined.

59. The user equipment according to any one of claims 46-58, wherein
the subframe determining unit is further adapted to determine that all downlink subframes are the second subframe according to a received high layer signaling from a base station, wherein the high layer signaling is for indicating that all downlink subframes are the second subframe.

60. The user equipment according to any one of claims 46-52, wherein
the subframe determining unit is adapted to determine the first subframe by at least one of: determining, by the subframe determining unit, a subframe as the first subframe in a case that a control format indicator CFI carried in a PCFICH of the subframe belongs to a first preset value set; and/or determining, by the subframe determining unit, a subframe as the second subframe in a case that a CFI carried in a PCFICH of the subframe is equal to a second preset value, wherein the second preset value does not belong to the first preset value set.

101

determining, by a base station, a first subframe and a second subframe, where the first subframe is a subframe with a control region, and the second subframe is a subframe with no control region

102

sending, by the base station, control information to a user equipment UE in the control region of the first subframe; and sending a data signal and/or an enhanced physical downlink control channel ePDCCH to the UE in the second subframe

**Fig. 1**

201

receiving, by a user equipment UE, a first subframe or a second subframe from a base station, where the first subframe is a subframe with a control region, and the second subframe is a subframe with no control region; and determining, by the UE, the first subframe and the second subframe

202

acquiring, by the UE, control information from the control region of the first subframe, and acquiring a data signal and/or an enhanced physical downlink control channel ePDCCH from the second subframe

**Fig. 2**

301

302

| subframe determining unit | sending unit |
| --- | --- |

**Fig. 3**

**Fig. 4**

**Fig. 5**

**Fig. 6**

601

603

| subframe receiving unit | information acquiring unit |

602

701

| subframe determining unit | bandwidth frequency domain determining unit |

**Fig. 7**

601

603

| subframe receiving unit | information acquiring unit |

602

701

| subframe determining unit | bandwidth frequency domain determining unit |

801

| channel acquiring unit |

**Fig. 8**

901

903

902

| receiver | processor | transmitter |

904

| memory |

**Fig. 9**

1001            1003            1002

| receiver | processor | memory |

**Fig. 10**

| INTERNATIONAL SEARCH REPORT | International application No. |
|---|---|
| | **PCT/CN2013/072694** |

**A. CLASSIFICATION OF SUBJECT MATTER**

See the extra sheet

According to International Patent Classification (IPC) or to both national classification and IPC

**B. FIELDS SEARCHED**

Minimum documentation searched (classification system followed by classification symbols)

IPC: H04L, H04B, H04B, H04W

Documentation searched other than minimum documentation to the extent that such documents are included in the fields searched

Electronic data base consulted during the international search (name of data base and, where practicable, search terms used)

CNTXT, VEN, BAIDU, GOOGLE: send, downlink, data, base station, ENB, UE, downlink, control w information, sub w frame, subframe, sub-frame, without, no

**C. DOCUMENTS CONSIDERED TO BE RELEVANT**

| Category* | Citation of document, with indication, where appropriate, of the relevant passages | Relevant to claim No. |
|---|---|---|
| A | CN 102449948 A (QUALCOMM INC.), 09 May 2012 (09.05.2012), abstract, description, paragraphs [0031]-[0038], and figure 4 | 1-60 |
| A | CN 102404266 A (ZTE CORP.), 04 April 2012 (04.04.2012), abstract, and figures 1-3 | 1-60 |
| A | US 2009/0196249 A1 (NTT DOCCMO. INC.), 06 August 2009 (06.08.2009), the whole document | 1-60 |

☐ Further documents are listed in the continuation of Box C.     ☒ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 10 October 2013 (10.10.2013) | **31 October 2013 (31.10.2013)** |

| Name and mailing address of the ISA/CN: State Intellectual Property Office of the P. R. China No. 6, Xitucheng Road, Jimenqiao Haidian District, Beijing 100088, China Facsimile No.: (86-10) 62019451 | Authorized officer **WU, Xinghua** Telephone No.: (86-10) **62411371** |

Form PCT/ISA/210 (second sheet) (July 2009)

## INTERNATIONAL SEARCH REPORT
### Information on patent family members

| | International application No. |
|---|---|
| | **PCT/CN2013/072694** |

| Patent Documents referred in the Report | Publication Date | Patent Family | Publication Date |
|---|---|---|---|
| CN 102449948 A | 09.05.2012 | KR 20120026124 A | 16.03.2012 |
| | | US 2010309867 A1 | 09.12.2010 |
| | | VN 29477 A | 16.09.2011 |
| | | WO 2010141912 A2 | 09.12.2010 |
| | | EP 2438704 A2 | 11.04.2012 |
| | | JP 2012529786 A | 22.11.2012 |
| | | EP 2493108 A1 | 29.08.2012 |
| | | HK 1170611 A0 | 01.03.2013 |
| | | IN 201108618 P4 | 17.05.2013 |
| | | CA 2763230 A1 | 09.12.2012 |
| | | ZA 201200035 A | 26.09.2012 |
| | | WO 2010141912 A3 | 14.07.2011 |
| | | TW 201132093 A | 16.09.2011 |
| CN 102404266 A | 04.04.2012 | None | |
| US 2009/0196249 A1 | 06.08.2009 | CN 102088345 A | 08.06.2011 |
| | | JP 4430052 B2 | 10.03.2010 |
| | | WO 2007148583 A1 | 27.12.2007 |
| | | EP 2031888 A1 | 04.03.2009 |
| | | IN 200804868 P2 | 20.03.2009 |
| | | RU 2446619 C2 | 27.07.2010 |
| | | BRPI 0713281 A2 | 06.03.2012 |
| | | CN 101502158 B | 13.02.2013 |
| | | RU 2009100414 A | 27.07.2010 |
| | | TW 200810410 A | 16.02.2008 |
| | | KR 20090021290 A | 02.03.2009 |
| | | JP 2008028973 A | 07.02.2008 |
| | | JP 2009273171 A | 19.11.2009 |
| | | JP 4850939 B2 | 11.01.2012 |
| | | TWI 362850 B | 21.04.2012 |
| | | CN 101502158 A | 05.08.2009 |

Form PCT/ISA/210 (patent family annex) (July 2009)

## INTERNATIONAL SEARCH REPORT

| International application No. |
| --- |
| **PCT/CN2013/072694** |

**CLASSIFICATION OF SUBJECT MATTER**

H04L 1/00 (2006.01) i

H04L 5/00 (2006.01) i

Form PCT/ISA/210 (extra sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 2013070686 W